(19) Europäisches Patentamt
European Patent Office
Office européen des brevets

(11) EP 2 258 177 A2

(12) **EUROPEAN PATENT APPLICATION**

(43) Date of publication:
**08.12.2010 Bulletin 2010/49**

(51) Int Cl.:
***A01N 27/00*** *(2006.01)* ***A01P 21/00*** *(2006.01)*

(21) Application number: **10176165.8**

(22) Date of filing: **11.12.2007**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **15.12.2006 EP 06126269**

(62) Document number(s) of the earlier application(s) in accordance with Art. 76 EPC:
**07857421.7 / 2 164 323**

(27) Previously filed application:
**11.12.2007 EP 07857421**

(71) Applicant: **Rohm and Haas Company**
**Philadelphia,**
**Pennsylvania 19106-2399 (US)**

(72) Inventor: **Freund, Annette**
**Philadelphia, PA 19106-2399 (US)**

(74) Representative: **Buckley, Guy Julian**
**Patent Outsourcing Limited**
**1 King Street**
**Bakewell**
**Derbyshire DE45 1DZ (GB)**

Remarks:
This application was filed on 10-09-2010 as a divisional application to the application mentioned under INID code 62.

(54) **Mixtures comprising 1-methylcyclopropene**

(57) The present invention relates to agrochemical mixtures comprising 1-methylcyclopropene as component (A) and as component (B) at least one active compound selected from the active ingredients as defined in the description, and to a method for improving the yield, the plant health and/or the vigor of an agricultural plant.

EP 2 258 177 A2

## Description

The present invention relates to agrochemical mixtures, comprising 1-methylcyclopropene as component (A) and as component (B) at least one active compound selected from the active ingredients as defined below, and to a method for improving the yield, the plant health and/or the vigor of an agricultural plant by applying to the plant, the locus where the plant is growing or is expected to grow, and/or the seeds from which the plant grows a non-phytotoxic effective amount of component (A) and as component (B) at least one active compound selected from the active ingredients as defined below.

A problem underlying the present invention is the desire for compositions that improve plants, a process which is commonly and hereinafter referred to as "plant health".

Another problem of the present invention is the need to manage plant stress, such as drought stress, cold stress, heat stress, salt stress or UV stress and all other biotic and abiotic stresses especially to reduce plant stress responses such as premature leaf senescence, undesired defoliation, reduced plant growth, reduced plant yield, abortion of flowers and fruits, and also stress responses due to plant pathogens or pest pressure.

Another problem of the present invention is the desire for reducing unfavourable responses of plants associated with the treatment of undesired weeds with herbicides.

It was also an object of the present invention to provide a method which allows both control of the harmful fungi or pests or undesired weeds and stress responses due to other factors such as drought, cold, heat or UV stress and all other biotic and abiotic stresses.

It was therefore an object of the present invention to provide mixtures and compositions which solve these problems.

We have found that this object is in part or in whole achieved by the compositions and uses as provided by the present invention. Particularly, according to one aspect, the present invention provides an agrochemical mixture, comprising as component (A) 1-methylcyclopropene and as component (B) at least one active compound selected from the group consisting of

B1) famoxadone (5-methyl-5-(4-phenoxyphenyl)-3-(phenylamino)-2,4-oxazolidinedione);

B2) carboxylic amides selected from benalaxyl, benodanil, boscalid, carboxin, mepronil, fenfuram, fenhexamid, flutolanil, furametpyr, metalaxyl, ofurace, oxadixyl, oxycarboxin, penthiopyrad, thifluzamid, tiadinil, 4-difluoromethyl-2-methyl-thiazol-5-carboxylic acid-(4'-bromo-biphenyl-2-yl)-amide, 4-difluoromethyl-2-methyl-thiazol-5-carboxylic acid-(4'-trifluoromethyl-biphenyl-2-yl)-amide, 4-difluoromethyl-2-methyl-thiazol-5-carboxylic acid-(4'-chloro-3'-fluoro-biphenyl-2-yl)-amide, 3-difluoromethyl-1-methyl-pyrazol-4-carboxylic acid-(3',4'-dichloro-4-fluoro-biphenyl-2-yl)-amide, 3,4-dichloro-isothiazol-5-carboxylic acid-(2-cyano-phenyl)-amide, dimethomorph, flumorph, flumetover, fluopicolide (picobenzamid), zoxamide, carpropamide, diclocymet, mandipropamid, N-(2-(4-[3-(4-chloro-phenyl)-prop-2-inyloxy]-3-methoxy-phenyl)-ethyl)-2-methanesulfonyl-amino-3-methyl-butyramid and N-(2-(4-[3-(4-chforo-phenyl)-prop-2-inyloxy]-3-methoxy-phenyl)-ethyl)-2-ethanesulfonylamino-3-methyl-butyramide;

B3) azoles selected from bitertanole, bromuconazole, cyproconazole, difenoconazole, diniconazole, enilconazole, epoxiconazole, fenbuconazole, flusilazole, fluquinconazole, flutriafol, hexaconazole, imibenconazole, ipconazole, metconazole, myclobutanil, penconazole, propiconazole, prothioconazole, simeconazole, tebuconazole, tetraconazole, triadimenol, triadimefon, triticonazole, cyazofamid, imazalil, pefurazoate, prochloraz, triflumizol, benomyl, carbendazim, fuberidazole, thiabendazole, ethaboxam, etridiazole and hymexazole;

B4) nitrogen-containing heterocyclic compounds selected from fluazinam, pyrifenox, 3-[5-(4-chloro-phenyl)-2,3-dimethyl-isoxazolidin-3-yl]-pyridine, bupirimat, cyprodinil, ferimzon, fenarimol, mepanipyrim, nuarimol, pyrimethanil, triforin, fludioxonil, fenpiclonil, aldimorph, dodemorph, fenpropimorph, tridemorph, iprodion, procymidon, vinclozolin, acibenzolar-S-methyl, anilazin, captan, captafol, dazomet, diclomezine, fenoxanil, folpet, fenpropidin, famoxadone, fenamidone, octhilinon, probenazol, proquinazid, pyroquilon, quinoxyfen, tricyclazol, 2-butoxy-6-iodo-3-propyl-chromen-4-one, 3-(3-bromo-6-fluoro-2-methyl-indole-1-sulfonyl)-[1,2,4]triazole-1-sulfonic acid dimethylamide;

85) carbamates and dithiocarbamates selected from ferbam, mancozeb, metiram, metam, propineb, thiram, zineb, ziram, diethofencarb, flubenthiavalicarb, iprovalicarb, propamocarb, 3-(4-chloro-phenyl)-3-(2-isopropoxycarbonylamino-3-methyl-butyrylamino)-propionic acid methylester and N-(1-(1-(4-cyanophenyl)ethanesulfonyl)-but-2-yl) carbamic acid -(4-fluorophenyl)ester;

B6) guanidines selected from dodin, iminoctadine and guazatin;

B7) antibiotics selected from kasugamycin, polyoxine, streptomycin and validamycin A;

B8) fentin salts;

B9) sulfur-containing heterocyclic compounds selected from isoprothiolan and dithianon;

B10) organophosphorous compounds selected from edifenphos, fosetyl, fosetyl-aluminium, iprobenfos, pyrazophos, tolclofos-methyl, phosphoric acid and the salts thereof;

B11) organo-chloro compounds selected from thiophanate methyl, chlorothalonil, dichlofluanid, tolylfluanid, flusulfamid, phthalide, hexachlorbenzene, pencycuron, quintozen;
B12) nitrophenyl derivatives selected from binapacryl, dinocap and dinobuton;
B13) inorganic active ingredients selected from Bordeaux composition, copper acetate, copper hydroxide, copper oxychloride, basic copper sulfate and sulfur;
B14) spiroxamine;
B15) cyflufenamide;
B16) cymoxanil;
B17) metrafenone;
B18) organo(thio)phosphates selected from acephate, azamethiphos, azinphos-methyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos and trichlorfon;
B19) carbamates selected from alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicar and triazamate;
B20) pyrethroids selected from allethrin, bifenthrin, cyfluthrin, cyhalothrin, cyphenothrin, cypermethrin, alpha-cypermethrin, beta-cypermethrin, zeta-cypermethrin, deltamethrin, esfenvalerate, etofenprox, fenpropathrin, fenvalerate, imiprothrin, lambda-cyhalothrin, permethrin, prallethrin, pyrethrin I and II, resmethrin, silafluofen, tau-fluvalinate, tefluthrin, tetramethrin, tralomethrin, transfluthrin and profluthrin, dimefluthrin;
B21) growth regulators selected from a) chitin synthesis inhibitors that are selected from the benzoylureas chlorfluazuron, diflubenzuron, flucycloxuron, flufenoxuron, hexaflumuron, lufenuron, novaluron, teflubenzuron, triflumuron; buprofezin, diofenolan, hexythiazox, etoxazole and clofentazine; b) ecdysone antagonists that are selceted from halofenozide, methoxyfenozide, tebufenozide and azadirachtin; c) juvenoids that are selected from pyriproxyfen, methoprene and fenoxycarb and d) lipid biosynthesis inhibitors that are selected from spirodiclofen, spiromesifen and spirotetramat;
B22) nicotinic receptor agonists/antagonists compounds selected from clothianidin, dinotefuran, (EZ)-1-(6-chloro-3-pyridylmethyl)-N-nitroimidazolidin-2-ylideneamine (imidacloprid), (EZ)-3-(2-chloro-1,3-thiazol-5-ylmethyl)-5-methyl-1,3,5-oxadiazinan-4-ylidene(nitro)amine (thiamethoxam), nitenpyram, acetamiprid, thiacloprid;
B23) the thiazol compound of formula ($\Gamma^1$)

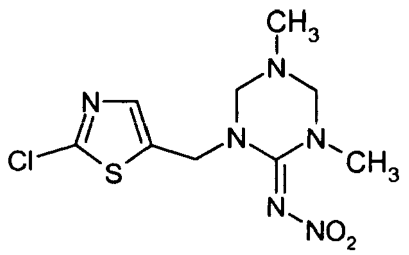

($\Gamma^1$)

,

B24) GABA antagonist compounds selected from acetoprole, endosulfan, ethiprole, 5-amino-1-(2,6-dichloro-α,α,α-trifluoro-p-tolyl)-4-trifluoromethylsulfinylpyrazole-3-carbonitrile (fipronil), vaniliprole, pyrafluprole, pyriprole and the phenylpyrazole compound of formula $\Gamma^2$

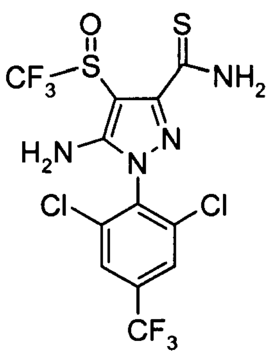

($\Gamma^2$)

,

B25) METI I compounds selected from fenazaquin, pyridaben, tebufenpyrad, tolfenpyrad and flufenerim;

B26) METI II and III compounds selected from acequinocyl, fluacyprim and hydramethylnon;

B27) chlorfenapyr;

B28) oxidative phosphorylation inhibitor compounds selected from cyhexatin, diafenthiuron, fenbutatin oxide and propargite;

B29) cyromazine;

B30) piperonyl butoxide;

B31) indoxacarb; and

B32) a compound selected from benclothiaz, bifenazate, cartap, flonicamid, pyridalyl, pymetrozine, sulfur, thiocyclam, flubendiamide, cyenopyrafen, flupyrazofos, cyflumetofen, amidoflumet, the aminoquinazolinone compound of formula $\Gamma^4$

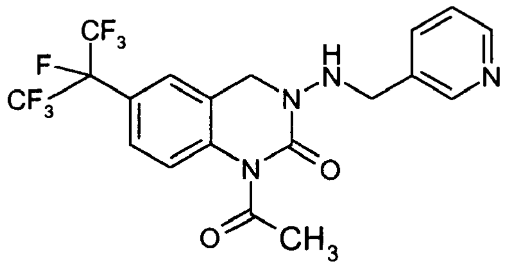

($\Gamma^4$),

and anthranilamide compounds of formula $\Gamma^5$

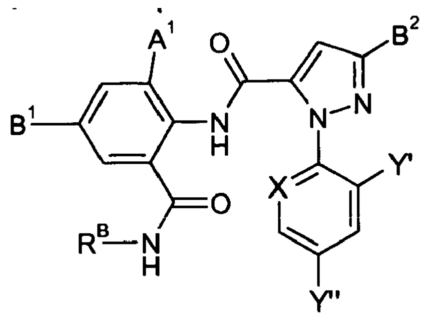

($\Gamma^5$)

,

wherein $A^1$ is $CH_3$, Cl, Br, I, X is C-H, C-Cl, C-F or N, Y' is F, Cl, or Br, Y" is F, Cl, $CF_3$, $B^1$ is hydrogen, Cl, Br, I, CN, $B^2$ is Cl, Br, $CF_3$, $OCH_2CF_3$, $OCF_2H$, and $R^B$ is hydrogen, $CH_3$ or $CH(CH_3)_2$;

B33) lipid biosynthesis inhibitors selected from chlorazifop, clodinafop, clofop, cyhalofop, diclofop, fenoxaprop, fenoxaprop-p, fenthiaprop, fluazifop, fluazifop-P, haloxyfop, haloxyfop-P, isoxapyrifop, metamifop, propaquizafop, quizalofop, quizalofop-P, trifop, alloxydim, butroxydim, clethodim, cloproxydim, cycloxydim, profoxydim, sethoxydim, tepraloxydim, tralkoxydim, butylate, cycloate, diallate, dimepiperate, EPTC, esprocarb, ethiolate, isopolinate, methiobencarb, molinate, orbencarb, pebulate, prosulfocarb, sulfallate, thiobencarb, tiocarbazil, triallate, vernolate, benfuresate, ethofumesate, bensulide and pinoxaden;

B34) ALS inhibitors selected from amidosulfuron, azimsulfuron, bensulfuron, chlorimuron, chlorsulfuron, cinosulfuron, cyclosulfamuron, ethametsulfuron, ethoxysulfuron, flazasulfuron, flupyrsulfuron, foramsulfuron, halosulfuron, imazosulfuron, iodosulfuron, mesosulfuron, metsulfuron, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, imazamethabenz, imazamox imazapic, imazapyr, imazaquin, imazethapyr, cloransulam, diclosulam, florasulam, flumetsulam, metosulam, penoxsulam, bispyribac, pyriminobac, propoxycarbazone, flucarbazone, pyribenzoxim, pyriftalid, pyrithiobac, flucetosulfuron, orthosulfamuron, pyrimisulfan;

B35) photosynthesis inhibitors selected from atraton, atrazine, ametryne, aziprotryne, cyanazine, cyanatryn, chlorazine, cyprazine, desmetryne, dimethametryne, dipropetryn, eglinazine, ipazine, mesoprazine, methometon, methoprotryne, procyazine, proglinazine, prometon, prometryne, propazine, sebuthylazine, secbumeton, simazine, simeton, simetryne, terbumeton, terbuthylazine, terbutryne, trietazine, ametridione, amibuzin, hexazinone, isomethiozin, metamitron, metribuzin, bromacil, isocil, lenacil, terbacil, brompyrazon, chloridazon, dimidazon, desmedipham, phenisopham, phenmedipham, phenmediphamethyl, benzthiazuron, buthiuron, ethidimuron, isouron, methabenzthiazuron, monoisouron, tebuthiuron, thiazafluron, anisuron, buturon, chlorbromuron, chloreturon, chlorotoluron, chloroxuron, difenoxuron, dimefuron, diuron, fenuron, fluometuron, fluothiuron, isoproturon, linuron, methiuron, metobenzuron, metobromuron, metoxuron, monolinuron, monuron, neburon, parafluron, phenobenzuron, siduron, tetrafluron, thidiazuron, cyperquat, diethamquat, difenzoquat, diquat, morfamquat, paraquat, bromobonil, bromoxynil, chloroxynil, iodobonil, ioxynil, amicarbazone, bromofenoxim, flumezin, methazole, bentazone, propanil, pentanochlor, pyridate, and pyridafol;

B36) protoporphyrinogen-IX oxidase inhibitors selected from acifluorfen, bifenox, chlomethoxyfen, chlornitrofen, ethoxyfen, fluorodifen, fluoroglycofen, fluoronitrofen, fomesafen, furyloxyfen, halosafen, lactofen, nitrofen, nitrofluorfen, oxyfluorfen, fluazolate, pyraflufen, cinidon-ethyl, flumiclorac, flumioxazin, flumipropyn, fluthiacet, thidiazimin, oxadiazon, oxadiargyl, azafenidin, carfentrazone, sulfentrazone, pentoxazone, benzfendizone, butafenacil, pyraclonil, profluazol, flufenpyr, flupropacil, nipyraclofen, etnipromid, and bencarbazone;

B37) bleacher herbicides selected from metflurazon, norflurazon, flufenican, diflufenican, picolinafen, beflubutamid, fluridone, flurochloridone, flurtamone, mesotrione, sulcotrione, isoxachlortole, isoxaflutole, benzofenap, pyrazolynate, pyrazoxyfen, benzobicyclon, amitrole, clomazone, aclonifen, 4-(3-trifluoromethylphenoxy)-2-(4-trifluoromethylphenyl)pyrimidine, known from EP 723960, topramezone, 4-hydroxy-3-{[2-methyl-6-(trifluoromethyl)-3-pyridinyl]carbonyl}bicyclo[3.2.1]oct-3-en-2-one, known from WO 00/15615, 4-hydroxy-3-{[2-(2-methoxyethoxy)methyl-6-(trifluoro-methyl)-3-pyridinyl]carbonyl}bicylo[3.2.1]oct-3-en-2-one, known from WO 01/94339, 4-hydroxy-3-[4-(methylsulfonyl)-2-nitrobenzoyl]bicyclo[3.2.1]-oct-3-en-2-one, known from EP 338992, 2-[2-chloro-4-(methylsulfonyl)-3-[(2,2,2-trifluoroethoxy)methyl]benzoyl]-3-hydroxy-2-cyclohexen-1-one (known from DE 19846792), and pyrasulfotole;

B38) glyphosate in its acid form or as a derivative thereof, such as the mono isopropylammonium salt, the sodium salt, trimesium salt (sulfosate) or a mixture thereof;

B39) glutamine synthase inhibitors selected from glufosinate and bilanaphos;

B40) asulam;

B41) mitose inhibitors selected from benfluralin, butralin, dinitramine, ethalfluralin, fluchloralin, isopropalin, methalpropalin, nitralin, oryzalin, pendimethalin, prodiamine, profluralin, trifluralin, amiprofos-methyl, butamifos, dithiopyr, thiazopyr, propyzamide, tebutam, chlorthal, carbetamide, chlorbufam, chlorpropham and propham;

B42) VLCFA inhibitors selected from acetochlor, alachlor, butachlor, butenachlor, delachlor, diethatyl, dimethachlor, dimethenamid, dimethenamid-P, metazachlor, metolachlor, S-metolachlor, pretilachlor, propachlor, propisochlor, prynachlor, terbuchlor, thenylchlor, xylachlor, allidochlor, CDEA, epronaz, diphenamid, napropamide, naproanilide, pethoxamid, flufenacet, mefenacet, fentrazamide, anilofos, piperophos, cafenstrole, indanofan and tridiphane;

B43) cellulose biosynthesis inhibitors selected from dichlobenil, chlorthiamid, isoxaben and flupoxam;

B44) decoupler herbicides selected from dinofenate, dinoprop, dinosam, dinoseb, dinoterb, DNOC, etinofen and medinoterb;

B45) auxin herbicides selected from clomeprop, 2,4-D, 2,4,5-T, MCPA, MCPA thioethyl, dichlorprop, dichlorprop-P, mecoprop, mecoprop-P, 2,4-DB, MCPB, chloramben, dicamba, 2,3,6-TBA, tricamba, clopyralid, fluroxypyr, picloram, triclopyr, benazolin, aminopyralid, quinclorac, and quinmerac;

B46) auxin transport inhibitors selected from naptalam and diflufenzopyr;

B47) benzoylprop, flamprop, flamprop-M, bromobutide, chlorflurenol, cinmethylin, methyldymron, etobenzanid, fosamine, metam, pyributicarb, oxaziclomefone, dazomet, triaziflam, methyl bromide, endothal and alsofurther ethylene modulators:

B48) inhibitors of ethylene biosynthesis which block the conversion of ACC into ethylene selected from $Co^{++}$ or $Ni^{++}$ ions, radical-scavenging phenolic substances (for example n-propyl gallate), polyamines (for example putrescine, spermine, spermidine), structural ACC analogs (for example $\alpha$-aminoisobutyric acid, L-aminocyclopropene-1-carboxylic acid), salicylic acid including its synthetic analogon acibenzolar-S-methyl, structural analogs of ascorbic acid which act as inhibitors of ACC oxidase, for example prohexadione-Ca or trinexapac-ethyl, and also triazolyl compounds as inhibitors of cytochrome P-450-dependent monooxygenase;

B49) inhibitors of the action of ethylene 2,5-norbornadiene, 3-amino-1,2,4-triazole or $Ag^{++}$ ions (for example from silver thiosulfate)

B50) ethylene biosynthesis inhibitors which inhibit the conversion of S-adenosyl-L-methionine into 1-aminocyclopropane-1-carboxylic acid (ACC), such as derivatives of vinylglycine, hydroxylamines, oxime ether derivatives;

in synergistically effective amounts.

Typically, mixtures are being applied comprising the component (A) and one component (B), however, mixtures may also comprise the component (A) as well as one or more components (B) such as one, two or three of the active compounds selected from the groups B1 to B50.

1-methylcyclopropene is a well-known plant growth regulator and ethylene-binding inhibitor which prevents the signal from ethylene to initiate stress responses in plants and which inhibits the sensitivity of plants or plant parts (e.g.

fruits and flowers) to ethylene by inhibiting its perception. Consequently, certain processes like the ripening in fruits are slowed down. Ethylene has been shown to be involved in various kinds of plant stress. Increased levels of ethylene in plants are for example responsible for many deleterious effects such as early senescence, fruit deterioration and inhibition of root elongation. Therefore, 1-methylcyclopropene is used as an ethylene antagonist for reducing stress induction and prolonging the life of ornamental plants and cut flowers by preventing ethylene from attaching to plant tissues. It is a postharvest tool for counteracting undesirable effects of ethylene on harvested fruits and vegetables during transport and storage as ethylene also promotes ripening and aging of plants, flowers, fruits, and vegetables.

The further ethylene modulators of groups B48) and B50) are cited and referenced in e.g. WO 05/044002.

The active compounds of groups B1) to B50) that can be used as component (B), their preparation and their action against harmful fungi, pests and undesirable weeds are generally known; they are commercially available. In most of the cases, they can also be found in The Pesticide Manual, 13th Edition, British Crop Protection Council (2003) among other publications.

- benalaxyl, methyl N-(phenylacetyl)-N-(2,6-xylyl)-DL-alaninate (DE 29 03 612),
- boscalid, 2-chloro-N-(4'-chlorbiphenyl-2-yl)nicotinamide (EP-A 545 099);
- carboxin, 5,6-dihydro-2-methyl-N-phenyl-1,4-oxathiin-3-carboxamide (US 3 249 499),
- mepronil, 3'-isopropoxy-o-toluanilide (US 3 937 840),
- fenhexamid, N-(2,3-dichloro-4-hydroxyphenyl)-1-methylcyclohexanecarboxamide (Proc. Br. Crop Prot. Conf. - Pests Dis., 1998, Vol. 2, p. 327);
- flutolanil, α,α,α-trifluoro-3'-isopropoxy-o-toluanilide (JP 1104514),
- furametpyr, 5-chloro-N-(1,3-dihydro-1,1,3-trimethyl-4-isobenzofuranyl)-1,3-dimethyl-1H-pyrazole-4-carboxamide [CAS RN 123572-88-3],
- metalaxyl, methyl N-(methoxyacetyl)-N-(2,6-xylyl)-DL-alaninate (GB 15 00 581);
- ofurace, (RS)-α-(2-chloro-N-2,6-xylylacetamido)-γ-butyrolactone [CAS RN 58810-48-3];
- oxadixyl; N-(2,6-dimethylphenyl)-2-methoxy-N-(2-oxo-3-oxazolidinyl)acetamide (GB 20 58 059),
- oxycarboxin, 5,6-dihydro-2-methyl-1,4-oxathiin-3-carboxanilide 4,4-dioxide (US 3 399 214),
- penthiopyrad, N-[2-(1,3-dimethylbutyl)-3-thienyl]-1-methyl-3-(trifluoromethyl)-1H-pyrazole-4-carboxamide (JP 10130268),
- thifluzamide, N-[2,6-dibromo-4-(trifluoromethoxy)phenyl]-2-methyl-4-(trifluoromethyl)-5-thiazolecarboxamide;
- tiadinil, 3'-chloro-4,4'-dimethyl-1,2,3-thiadiazole-5-carboxanilide [CAS RN 223580-51-6],
- dimethomorph, 3-(4-chlorophenyl)-3-(3,4-dimethoxyphenyl)-1-morpholin-4-yl-propenone (EP-A 120 321);
- flumorph, 3-(4-fluorophenyl)-3-(3,4-dimethoxyphenyl)-1-morpholin-4-ylpropenone (EP-A 860 438);
- flumetover, 2-(3,4-dimethoxyphenyl)-N-ethyl-α,α,α-trifluoro-N-methyl-p-tofuamide [AGROW No. 243, 22 (1995)],
- fluopicolide (picobenzamid), 2,6-dichloro-N-(3-chloro-5-trifluoromethylpyridin-2-ylmethyl)benzamide (WO 99/42447);
- zoxamide, (RS)-3,5-dichloro-N-(3-chloro-1-ethyl-1-methyl-2-oxopropyl)-p-toluamide [CAS RN 156052-68-5];
- carpropamid, 2,2-dichloro-N-[1-(4-chlorophenyl)ethyl]-1-ethyl-3-methylcyclopropane-carboxamide [CAS RN 104030-54-8],
- diclocymet, 2-cyano-N-[(1R)-1-(2,4-dichlorophenyl)ethyl]-3,3-dimethyl butanamide;
- mandipropamid, (RS)-2-(4-chlorophenyl)-N-[3-methoxy-4-(prop-2-ynyloxy)phenethyl]-2-(prop-2-ynyloxy)acetamide [CAS RN 374726-62-2];- bitertanole, β-([1,1'-biphenyl]-4-yloxy)-α-(1,1-dimethylethyl)-1H-1,2,4-triazole-1-ethanol (DE 23 24 020),
- bromuconazole, 1-[[4-bromo-2-(2,4-dichlorophenyl)tetrahydro-2-furanyl]methyl]-1H-1,2,4-triazofe (Proc. 1990 Br. Crop. Prot. Conf. - Pests Dis. Vol. 1, p. 459);
- cyproconazole, 2-(4-chlorophenyl)-3-cyclopropyl-1-[1,2,4]triazol-1-ylbutan-2-ol (US 4 664 696);
- difenoconazole, 1-{2-[2-chloro-4-(4-chlorophenoxy)phenyl]-4-methyl-[1,3]dioxolan-2-ylmethyl}-1H-[1,2,4]triazole (GB-A 2 098 607);
- diniconazole, (βE)-β-[(2,4-dichlorophenyl)methylene]-α-(1,1-dimethylethyl)-1H-1,2,4-triazole-1-ethanol (Noyaku Kagaku, 1983, Vol. 8, p. 575);
- enilconazole (imazalil), 1-[2-(2,4-dichlorphenyl)-2-(2-propenyloxy)ethyl]-1H-imidazole (Fruits, 1973, Vol. 28, p. 545);
- epoxiconazole, (2RS,3SR)-1-[3-(2-chlorophenyl)-2,3-epoxy-2-(4-fluorophenyl)propyl]-1H-1,2,4-triazole (EP-A 196 038);
- fenbuconazole, α-[2-(4-chlorophenyl)ethyl]-α-phenyl-1H-1,2,4-triazole-1-propanenitrile (Proc. 1988 Br. Crop Prot. Conf. - Pests Dis. Vol. 1, p. 33);
- flusilazole, 1-{[bis-(4-fluorophenyl)methylsilanyl]methyl}-1H-[1,2,4]triazole (Proc. Br. Crop Prot. Conf.-Pests Dis., 1, 413 (1984));
- fluquinconazole, 3-(2,4-dichlorophenyl)-6-fluoro-2-[1,2,4]-triazol-1-yl-3H-quinazolin-4-one (Proc. Br. Crop Prot. Conf.-Pests Dis., 5-3, 411 (1992));

- flutriafol, α-(2-fluorophenyl)-α-(4-fluorophenyl)-1H-1,2,4-triazole-1-ethanol (EP 15 756);
- hexaconazole, 2-(2,4-dichlorophenyl)-1-[1,2,4]triazol-1-ylhexan-2-ol (CAS RN 79983-71-4);
- imibenconazole, (4-chlorophenyl)methyl N-(2,4-dichlorophenyl)-1H-1,2,4-triazole-1-ethanimidothioate ((Proc. 1988 Br. Crop Prot. Conf. - Pests Dis. Vol. 2, p. 519),
- ipconazole, 2-[(4-chlorophenyl)methyl]-5-(1-methylethyl)-1-(1H-1,2,4-triazol-1-yl-methyl)cyclopentanol (EP 267 778),
- metconazole, 5-(4-ch)orobenzyl)-2,2-dimethyl-1-[1,2,4]triazol-1-ylmethytcyclopentanol (GB 857 383);
- myclobutanil, 2-(4-chlorophenyl)-2-[1,2,4]triazol-1-ylmethylpentanenitrile (CAS RN 88671-89-0);
- penconazole, 1-[2-(2,4-dichlorophenyl)pentyl]-1H-[1,2,4]triazole (Pesticide Manual, 12th Ed. (2000), p.712);
- propiconazole, 1-[[2-(2,4-dichlorophenyl)-4-propyl-1,3-dioxolan-2-yl]methyl]-1H-1,2,4-triazole (BE 835 579);
- prothioconazole, 2-[2-(1-chlorocyclopropyl)-3-(2-chlorophenyl)-2-hydroxypropyl]-2,4-dihydro-[1,2,4]triazole-3-thione (WO 96/16048);
- simeconazole, α-(4-fluorophenyl)-α-[(trimethylsilyl)methyl]-1H-1,2,4-triazole-1-ethanol [CAS RN 149508-90-7],
- tebuconazole, 1-(4-chlorophenyl)-4,4-dimethyl-3-[1,2,4]triazol-1-ylmethylpentan-3-ol (EP-A 40 345);
- tetraconazole, 1-[2-(2,4-dichlorophenyl)-3-(1,1,2,2-tetrafluoroethoxylpropyl]-1H-1,2,4-triazole (EP 234 242);
- triadimenol, β-(4-chlorophenoxy)-α-(1,1-dimethylethyl)-1H-1,2,4-triazole-1-ethanol;
- triadimefon, 1-(4-chlorophenoxy)-3,3-dimethyl-1-(1H-1,2,4-triazol-1-yl)-2-butanone;
- triticonazole, (5E)-5-[(4-chlorophenyl)methylene]-2,2-dimethyl-1-(1H-1,2,4-triazol-1-ylmethyl)cyclopentanol (FR 26 41 277);
- cyazofamid, 4-chloro-2-cyano-N,N-dimethyl-5-(4-methylphenyl)-1H-imidazole-1-sulfonamide (CAS RN 120116-88-3],
- pefurazoate, 4-pentenyl 2-[(2-furanylmethyl)(1H-imidazol-1-ylcarbonyl)amino]butanoate [CAS RN 101903-30-4],
- prochloraz, N-{propyl-[2-(2,4,6-trichlorophenoxy)ethyl]}imidazole-1-carboxamide (US 3 991 071);
- triflumizole, (4-chloro-2-trifluoromethylphenyl)-(2-propoxy-1-[1,2,4]triazol-1-ylethylidene)amine (JP-A 79/119 462)
- benomyl, N-butyl-2-acetylaminobenzoimidazol-1-carboxamide (US 3 631 176);
- carbendazim, methyl (1H-benzoimidazol-2-yl)-carbamate (US 3 657 443);
- fuberidazole, 2-(2-furanyl)-1H-benzimidazole (DE 12 09 799),
- thiabendazole, 2-(1,3-thiazol-4-yl)benzimidazole (US 3 017 415),
- ethaboxam, N-(cyano-2-thienylmethyl)-4-ethyl-2-(ethylamino)-5-thiazolcarboxamide (EP-A 639 574),
- etridiazole,
- hymexazole, 5-methyl-1,2-oxazol-3-ol (JP 518249, JP 532202),
- fluazinam, 3-chloro-N-[3-chloro-2,6-dinitro-4-(trifluoromethyl)phenyl]-5-(trifluoromethyl)-2-pyridinamine (The Pesticide Manual, publ. The British Crop Protection Council, 10th ed. (1995), p. 474);
- pyrifenox, 1-(2,4-dichlorophenyl)-2-(3-pyridinyl)ethanone O-methyloxime (EP-A 49 854);
- bupirimate, 5-butyl-2-ethylamino-6-methylpyrimidin-4-yldimethylsulfamate [CAS RN 41483-43-6];
- cyprodinil, (4-cyclopropyl-6-methylpyrimidin-2-yl)phenylamine (EP-A 310 550);
- ferimzone, (Z)-2'-methylacetophenone 4,6-dimethylpyrimidin-2-ylhydrazone [CAS RN 89269-64-7];
- fenarimol, (4-chlorophenyl) (2-chlorophenyl) pyrimidin-5-ylmethanol (GB 12 18 623);
- mepanipyrim, (4-methyl-6-prop-1-ynylpyrimidin-2-yl)phenylamine (EP-A 224 339);
- nuarimol, α-(2-chlorophenyl)-α-(4-fluorophenyl)-5-pyrimidinemethanol (GB 12 18 623);
- pyrimethanil, 4,6-dimethylpyrimidin-2-ylphenylamine (DD-A 151 404);
- triforine, N,N'-{piperazine-1,4-diylbis[(trichloromethyl)methylene]}diformamide (DE 19 01 421);
- fludioxonil, 4-(2,2-difluorobenzo[1,3]dioxol-4-yl)-1H-pyrrole-3-carbonitrile (The Pesticide Manual, publ. The British Crop Protection Council, 10th ed. (1995), p. 482);
- fenpiclonil, 4-(2,3-dichlorophenyl)-1H-pyrrole-3-carbonitrile (Proc. 1988 Br. Crop Prot. Conf. - Pests Dis., Vol. 1, p. 65);
- aldimorph, 4-alkyl-2,5(or 2,6)-dimethylmorpholine, comprising 65-75% of 2,6-dimethylmorpholine and 25-35% of 2,5-dimethylmorpholine, comprising more than 85% of 4-dodecyl-2,5(or 2,6)-dimethylmorpholine, where "alkyl" may also include octyl, decyl, tetradecyl or hexadecyl and where the cis/trans ratio is 1:1;
- dodemorph, 4-cyclododecyl-2,6-dimethylmorpholine (DE 1198125);
- fenpropimorph, (RS)-cis-4-[3-(4-tert-butylphenyl)-2-methylpropyl]-2,6-dimethylmorpholine (DE 27 52 096);
- tridemorph, 2,6-dimethyl-4-tridecylmorpholine (DE 11 64 152);
- iprodione, N-isopropyl-3-(3,5-dichlorophenyl)-2,4-dioxoimidazolidine-1-carboxamide (GB 13 12 536);
- procymidone, N-(3,5-dichlorophenyl)-1,2-dimethylcyclopropane-1,2-dicarboximide (US 3 903 090);
- vinclozolin, 3-(3,5-dichlorophenyl)-5-methyl-5-vinyloxazolidine-2,4-dione (DE-OS 22 07 576);
- acibenzolar-S-methyl, methyl benzo[1,2,3]thiadiazole-7-carbothionate;
- anilazine, 4,6-dichloro-N-(2-chlorophenyl)-1,3,5-triazine-2-amine (US 2 720 480);
- captan, 2-trichloromethylsulfanyl-3a,4,7,7a-tetrahydroisoindole-1,3-dione (US 2 553 770);

- captafol, N-(1,1,2,2-tetrachloroethylthio)cyclohex-4-ene-1,2-dicarboximide (Phytopathology 52, S. 754 (1962));
- dazomet, 3,5-dimethyl-1,3,5-thiadiazinane-2-thione (Bull. Soc. Chim. Fr. Vol. 15, p. 891 (1897));
- diclomezine, 6-(3,5-dichlorophenyl)-p-tolyl)pyridazin-3(2H)-one (US 4,052,395);
- fenoxanil, N-(1-cyano-1,2-dimethylpropyl)-2-(2,4-dichlorophenoxy) propanamide (EP-A 262 393);
- folpet, 2-trichloromethylsulfanylisoindole-1,3-dione (US 2 553 770);
- fenpropidin, (RS)-1-[3-(4-tert-butylphenyl)-2-methylpropyl]piperidine (DE 27 52 096);
- famoxadone, (RS)-3-anilino-5-methyl-5-(4-phenoxyphenyl)-1,3-oxazolidine-2,4-dione [CAS RN 131807-57-3];
- fenamidone, (S)-1-anilino-4-methyl-2-methylthio-4-phenylimidazolin-5-one [CAS RN 161326-34-7];
- octhilinone,
- probenazole, 3-allyloxy-1,2-benzothiazole 1,1-dioxide;
- proquinazid, 6-iodo-2-propoxy-3-propylquinazolin-4(3H)-one (WO 97/48684);
- pyroquilon, 1,2,5,6-tetrahydropyrrolo[3,2,1-ij]quinolin-4-on (GB 139 43 373)
- quinoxyfen, 5,7-dichloro-4-(4-fluorophenoxy)quinoline (US 5 240 940);
- tricyclazole, 5-methyl-1,2,4-triazolo[3,4-b]benzothiazole (GB 14 19 121);
- ferbam, iron(3+) dimethyldithiocarbamate (US 1 972 961);
- mancozeb, manganese ethylenebis(dithiocarbanate) zinc complex (US 3 379 610);
- maneb, manganese ethylenebis(dithiocarbamate) (US 2 504 404);
- metiram, zinc ammoniate ethylenebis(dithiocarbamate) (US 3 248 400);
- metam, methyldithiocarbaminic acid (US 2 791 605);
- propineb, zinc propylenebis(dithiocarbamate) polymer (BE 611 960);
- thiram, bis(dimethylthiocarbamoyl) disulfide (DE 642 532);
- zineb, zinc ethylenebis(dithiocarbamate) (US 2 457 674);
- ziram, dimethyldithiocarbamate [CAS RN 137-30-4];
- diethofencarb, isopropyl 3,4-diethoxycarbanilate (EP-A 78 663);
- flubenthiavalicarb (benthiavalicarb), isopropyl {(S)-1-[(1R)-1-(6-fluorobenzothiazol-2-yl)ethylcarbamoyl]-2-methylpropyl}carbamate (JP-A 09/323 984);
- iprovalicarb, isopropyl [(1S)-2-methyl-1-(1-p-tolylethylcarbamoyl)propyl]carbamate (EP-A 472 996);
- propamocarb, propyl 3-(dimethylamino)propylcarbamate (DE 16 43 040);
- dodine, (2,4-dichlorophenoxy)acetic acid (US 2 867 562);
- iminoctadine, bis(8-guanidinooctyl)amine (GB 11 14 155);
- guazatine, mixture of products from the amidation of iminodi(octamethylene)diamine, mainly iminoctadine [CAS RN 108173-90-6];
- kasugamycin, 1 L-1,3,4/2,5,6-1-deoxy-2,3,4,5,6-pentahydroxycyclohexyl 2-amino-2,3,4,6-tetradeoxy-4-(α-iminoglycino)-α-D-arabino-hexopyranoside [CAS RN 6980-18-3];
- polyoxine, 5-(2-amino-5-O-carbamoyl-2-deoxy-L-xylonamido)-1-(5-carboxy-1,2,3,4-tetrahydro-2,4-dioxopyrimidin-1-yl)-1,5-dideoxy-β-D-allofuranuronic acid and the salts thereof [CAS RN 22976-86-9];
- streptomycin, O-2-deoxy-2-methylamino-α-L-glucopyranosyl-(1→2)-O-5-deoxy-3-C-formyl-a-L-lyxofuranosyl-(1→4)$N^1$,$N^3$-diamidino-D-streptamine (J. Am. Chem. Soc. 69, S.1234 (1947));
- validamycin A,
- fentin acetate, triphenyltin acetate (US 3 499 086);
- isoprothiolan, diisopropyl 1,3-dithiolan-2-ylidenemalonat (Proc. Insectic. Fungic. Conf. 8. Bd. 2, S. 715 (1975));
- dithianon, 5,10-Dioxo-5,10-dihydronaphtho[2,3-b][1,4]dithiin-2,3-dicarbonitril (GB 857 383);
- edifenphos, O-ethyl S,S-diphenyl phosphorodithioate (DE-A 14 93 736);
- fosetyl, fosetyl-aluminum, (aluminum) ethylphosphonate (FR 22 54 276);
- iprobenfos, S-benzyl O,O-diisopropyl phosphorothioate (Jpn. Pesticide Inf., No. 2, S. 11 (1970));
- pyrazophos, ethyl 2-diethoxyphosphinothioyloxy-5-methylpyrazolo[1,5-a]pyrimidine-6-carboxylate (DE 15 45 790);
- tolclofos-methyl, O-2,6-dichloro-p-tolyl O,O-dimethyl phosphorothioate (GB 14 67 561);
- thiophanate-methyl, 1,2-phenylenebis(iminocarbonothioyl)bis(dimethylcarbamate) (DE-OS 19 30 540);
- chlorothalonil, 2,4,5,6-tetrachloroisophthalonitrile (US 3 290 353);
- dichlofluanid, N-dichlorofluoromethylthio-N',N'-dimethyl-N-phenylsulfamide (DE 11 93 498);
- tolylfluanid, N-dichlorofluoromethylthio-N',N'-dimethyl-N-p-tolylsulfamide (DE 11 93 498);
- flusulfamide, 2',4-dichloro-a,a,a-trifluoro-4'-nitro-m-toluenesulfanilide (EP-A 199 433);
- phthalide (DE 16 43 347);
- hexachlorobenzene (C. R. Seances Acad. Agric. Fr., Vol. 31, p. 24 (1945));
- pencycuron, 1-(4-chlorobenzyl)-1-cyclopentyl-3-phenylurea (DE 27 32 257);
- quintozene, pentachloronitrobenzene (DE 682 048);
- binapacryl, (RS)-2-sec-Butyl-4,6-dinitrophenyl 3-methylcrotonat [CAS RN 485-31-4];
- dinocap, mixture of 2,6-dinitro-4-octylphenylcrotonate and 2,4-dinitro-6-octyl-phenylcrotonate, wherein "octyl" is a

mixture of 1-methylheptyl, 1-ethylhexyl and 1-propylpentyl (US 2,526,660);

- dinobuton, (RS)-2-sec-Butyl-4,6-dinitrophenyl isopropyl carbonat [CAS RN 973-21-7];
- Bordeaux composition, mixture of $CuSO_4$ x $3Cu(OH)_2$ x $3CaSO_4$ [CAS RN 8011-63-0]
- copper acetate, $Cu(OCOCH_3)_2$ [CAS RN 8011-63-0];
- copper oxychloride, $Cu_2Cl(OH)_3$ [CAS RN 1332-40-7];
- basic copper sulfate, $CuSO_4$ [CAS RN 1344-73-6];
- spiroxamine, (8-tert-butyl-1,4-dioxaspiro[4.5]dec-2-yl)diethylamine (EP-A 281 842).
- cyflufenamid, (Z)-N-[α-(cyclopropylmethoxyimino)-2,3-difluoro-6-(trifluoromethyl)benzyl]-2-phenylacetamide (WO 96/19442);
- cymoxanil, 1-(2-cyano-2-methoxyiminoacetyl)-3-ethylurea (US 3 957 847);
- metrafenone, 3'-bromo-2,3,4,6'-tetramethoxy-2',6-dimethylbenzophenone (US 5 945 567);

The compounds named according to IUPAC, their preparation and their fungicidal action are likewise known:

N-(4'-bromobiphenyl-2-yl)-4-difluoromethyl-2-methylthiazole-5-carboxamide, N-(4'-trifluoromethylbiphenyl-2-yl)-4-difluoromethyl-2-methylthiazole-5-carboxamide, N-(4'-chloro-3'-fluorobiphenyl-2-yl)-4-difluoromethyl-2-methylthiazole-5-carboxamide, N-(3',4'-dichloro-4-fluorobiphenyl-2-yl)-3-difluoromethyl-1-methylpyrazole-4-carboxamide (WO 03/066609), 3,4-dichloro-isothiazol-5-carboxylic acid (2-cyanophenyl) amide (WO 99/24413); N-(2-(4-[3-(4-Chlor-phenyl)-prop-2-ynyloxy]-3-methoxy-phenyl)-ethyl)-2-methan-sulfonylamino-3-methyl-butyramid, N-(2-(4-[3-(4-Chlor-phenyl)-prop-2-ynyloxy]-3-methoxy-phenyl)-ethyl)-2-ethanesulfonylamino-3-methyl-butyramid (WO 04/49804); 3-[5-(4-chlorophenyl)-2,3-dimethylisoxazolidin-3-yl]pyridine (EP-A 10 35 122); 2-butoxy-6-iodo-3-propylchromen-4-one (WO 03/14103), methyl 3-(4-chlorophenyl)-3-(2-isopropoxycarbonylamino-3-methyl-butyrylamino)propanoate (EP-A 1028125)

Thiamides of formula $\Gamma^1$ and their preparation have been described in WO 98/28279. Lepimection is known from Agro Project, PJB Publications Ltd, November 2004. Benclothiaz and its preparation have been described in EP-A1 454621. Methidathion and Paraoxon and their preparation have been described in Farm Chemicals Handbook, Volume 88, Meister Publishing Company, 2001. Acetoprole and its preparation have been described in WO 98/28277. Flupyrazofos has been described in Pesticide Science 54, 1988, p.237-243 and in US 4822779. Pyrafluprole and its preparation have been described in JP 2002193709 and in WO 01/00614. Pyriprole and its preparation have been described in WO 98/45274 and in US 6335357. Amidoflumet and its preparation have been described in US 6221890 and in JP 21010907. Flufenerim and its preparation have been described in WO 03/007717 and in WO 03/007718. Cyflumetofen and its preparation have been described in WO 04/080180. Anthranilamides of formula $\Gamma^5$ and their preparation have been described in WO 01/70671; WO 02/48137; WO 03/24222, WO 03/15518, WO 04/67528; WO 04/33468; and WO 05/118552.

According to one embodiment of the present invention, component (B) is famoxadone.

According to another embodiment of the present invention, component (B) is a carboxylic amide selected from the group B2).

According to another embodiment of the present invention, component (B) is an azole selected from the group B3).

According to another embodiment of the present invention, component (B) is a nitrogen-containing heterocyclic compound selected from the group B4).

According to another embodiment of the present invention, component (B) is a carbamate or thiocarbamate selected from the group B5).

According to another embodiment of the present invention, component (B) is a guanidine selected from the group B6).

According to another embodiment of the present invention, component (B) is an antibiotic selected from the group B7).

According to another embodiment of the present invention, component (B) is a fentin salt.

According to another embodiment of the present invention, component (B) is isoprothiolan or dithianon.

According to another embodiment of the present invention, component (B) is an organophosphorous compound selected from the group B10).

According to another embodiment of the present invention, component (B) is an organo-chloro compound selected from the group B11).

According to another embodiment of the present invention, component (B) is a nitrophenyl derivative selected from the group B12).

According to another embodiment of the present invention, component (B) is an inorganic ingredient selected from the group B13).

According to another embodiment of the present invention, component (B) is an ALS inhibitor selected from the group B34).

According to another embodiment of the present invention, component (B) is clothianidin.

According to another embodiment of the present invention, component (B) is glufosinat.

According to another embodiment of the present invention, component (B) is spiroxamine.

According to another embodiment of the present invention, component (B) is cyflufenamide.

According to another embodiment of the present invention, component (B) is cymoxanil.

According to another embodiment of the present invention, component (B) is metrafenone.

According to another preferred embodiment of the present invention, component (B) is (EZ)-3-(2-chloro-1,3-thiazol-5-ylmethyl)-5-methyl-1,3,5-oxadiazinan-4-ylidene(nitro)amine (thiamethoxam).

According to another preferred embodiment of the present invention, component (B) is 5-amino-1-(2,6-dichloro-α,α,α-trifluoro-p-tolyl)-4-trifluoromethylsulfinylpyrazole-3-carbonitrile (fipronil).

According to another preferred embodiment of the present invention, component (B) is(EZ)-1-(6-chloro-3-pyridylmethyl)-N-nitroimidazolidin-2-ylideneamine (imidacloprid).

According to another preferred embodiment of the present invention, component (B) is prohexadione-Ca.

According to another preferred embodiment of the present invention, component (B) is glyphosate.

According to another preferred embodiment of the present invention, component (B) is diflufenzopyr.

The inventive compositions are suitable for improving the health of plants when applied to plants, parts of plants, seeds, or at their locus of growth.

Thus, it was surprisingly found within the framework of the present invention that the simultaneous, that means conjoint or separate, use of 1-methylcyclopropene (component A) together with at least one active compound selected from the groups B1 to B50 as component (B) or the subsequent use of 1-methylcyclopropene and at least one active compound selected from the groups B1 to B50 as component (B) leads to a synergistic effect, i.e. the effectiveness of the mixture is higher compared to the use of the individual components, especially when the compound selected from the groups B1 to B50 as component (B) has a different mode of action as 1-methylcyclopropene. Thereby, synergistic yield increasing effects and/or synergistic vigor improving effects can be obtained. Surprisingly, 1-methylcyclopropene can be used as synergist for a variety of different active ingredients. By simultaneous application of the 1-methylcyclopropene with a component (B) together or by separate application of 1-methylcyclopropene and component (B), said effects are increased more than additively. 1-methylcyclopropene and component (B) are thus preferably present in synergistic amounts.

Consequently, according to another aspect, the present invention provides the use of a composition as defined according to the present invention for increasing the yield and/or improving the vigor of an agricultural plant.

The present invention further provides a method for increasing the yield and/or improving the vigor of a plant, which comprises treating the plant, the locus where the plant is growing or is expected to grow, and/or the seeds from which the plant grows with a non-phytotoxic effective amount of component (A) and component (B) as defined herein. According to this inventive method the plant, the locus where the plant is growing or is expected to grow, and/or the seeds from which the plant grows are preferably treated simultaneously (together or separately) or subsequently with the components (A) and (B).

According to the present invention, "increased yield" of an agricultural plant means that the yield of a product of the respective plant is increased by a measurable amount over the yield of the same product of the plant produced under the same conditions, but without the application of the present invention. According to the present invention, it is preferred that the yield be increased by at least 0,5 %, more preferred at least 1 %, even more preferred at least 2 %, still more preferred at least 4 %.

According to the present invention, the terms "improved plant vigor" and "improved plant health" are synonyms, meaning that certain crop characteristics are increased or improved by a measurable or noticeable amount over the same factor of the plant produced under the same conditions, but without the application of the present invention, such as: delay of senescence, root growth, longer panicles, increased or improved plant stand, the plant weight, plant height, emergence, improved visual appearance, protein content, oil content, starch content, more developed root system (improved root growth), reduced ethylene (reduced production and/or inhibition of reception), tillering increase, increase in plant height, bigger leaf blade, less dead basal leaves, stronger tillers, greener leaf color, pigment content, photosynthetic activity, less input needed (such as fertilizers or water), less seeds needed, enhanced plant vigor, more productive tillers, earlier flowering, early grain maturity, less plant verse (lodging), increased shoot growth, increased plant stand and early and better germination, improved vitality of the plant, improved quality of the plant, improved quality of the fruits or vegetables (or other products produced by the plant), improved self defence mechanism of the plant such as induced and improved tolerance against stress factors such as fungi, bacteria, viruses and/or insects and stress factors such as heat stress, cold stress, drought stress, UV stress and/or salt stress. Advantageous properties, obtained especially from treaded seeds, are e.g. improved germination and field establishment, better vigor, more homogen field establishment. Advantageous properties, obtained especially from foliar and/or in-furrow application are e.g. improved

plant growth and plant development, better growth, more tillers, greener leaves, larger leaves, more biomass, better roots, improved stress tolerance of the plants, more grain yield, more biomass harvested, improved quality of the harvest (content of fatty acids, metabolites, oil etc.), more marketable products (e.g. improved size), improved process (e.g. longer shelf-life, better extraction of compounds), improved quality of seeds (for being seeded in the following seasons for seed production); or any other advantages familiar to a person skilled in the art.

The improvement of the plant vigor according to the present invention particularly means that the improvement of any one or several or all of the above mentioned plant characteristics are improved independently of or in combination with the pesticidal action of the composition or active ingredients.

According to one embodiment of the present invention, the inventive compositions are used for yield increase of an agricultural plant.

According to one embodiment of the present invention, the inventive compositions are used for improved tolerance against stress factors such as fungi, bacteria, viruses and/or insects and stress factors such as heat stress, cold stress, drought stress, UV stress and/or salt stress of an agricultural plant.

According to one embodiment of the described methods of the invention the treatment is made to vegetables and field crops. According to a further embodiment of the described methods of the invention the treatment is made to cereals such as for example wheat, barley or rye. In one specific embodiment, the method of the invention can be applied to field crops, such as soybeans, corn, cotton, wheat, barley, rye, rice, sugar beets, sugar cane and/or oilseed rape, in particular soybeans, corn, cotton, tobacco, common beans, wheat, barley, rye, peas, and others. In relation to these crops the method is preferably applied by treating the seeds or the plants. In this embodiment it may be preferred that the plants are treated with two to three applications per season.

According to another embodiment of the described methods of the invention the treatment is made to potatoes, tomatoes, cucurbits, cucumbers, melons, watermelons, garlic, onions, bananas, peanuts, carrots, cabbage, peppers, common beans, peas, lentils and/or lettuce, in particular potatoes, tomatoes, cucurbits, cucumbers, melons, watermelons, garlic, onions, and/or lettuce.

According to another embodiment of the described methods of the invention the treatment is made to apples, pears, stone fruits, or citrus, in particular apples, stone fruits, and/or citrus.

According to another embodiment of the described methods of the invention, the treatment is made to strawberries, cherries, almonds, mango, papaya, blueberries and/or grapes in particular strawberries and/or cherries.

According to another embodiment of the described methods of the invention, the treatment is made to turf and/or ornamentals.

According to another embodiment of the described methods of the invention, the treatment is made to tea, tobacco and/or coffee.

According to another embodiment of the described methods of the invention, the treatment is made to soybean, sugarcane, corn, cotton, wheat, barley, rye, rice, sugar beets or oilseed rape.

The inventive mixtures can also be employed in treatment of plants or plant parts (such as seed) which are resistant to herbicides from the group consisting of the sulfony-lureas, imidazolinones, glufosinate-ammonium or glyphosate-isopropylammonium and analogous active substances (see for example, EP-A-0242236, EP-A-242246) (WO 92/00377) (EP-A-0257993, U.S. Pat. No. 5,013,659) or in transgenic crop plants, for example cotton, with the capability of producing *Bacillus thuringiensis* toxins (Bt toxins) which make the plants resistant to certain pests (EP-A-0142924, EP-A-0193259).

Furthermore, the mixtures can be used also for the treatment of plants or plant parts (such as seed) which have modified characteristics in comparison with existing plants consist, which can be generated for example by traditional breeding methods and/or the generation of mutants, or by recombinant procedures). For example, a number of cases have been described of recombinant modifications of crop plants for the purpose of modifying the starch synthesized in the plants (e.g. WO 92/11376, WO 92/14827, WO 91/19806) or of transgenic crop plants having a modified fatty acid composition (WO 91/13972).

According to one embodiment of the described methods of the invention, two to ten, three to eight or four to six treatments with component (A) and at least one component (B) are made during a season.

According to one embodiment of the invention, the inventive composition is applied via the leaves or to the soil. According to another embodiment of the described methods of the invention, the treatment(s) are carried out as foliar application. In one preferred embodiment of the present invention the method according to the invention is carried out as foliar application or spray application, respectively. Preferably, one, two, three, four, five and up to ten applications during one season are carried out, specifically more than two applications, and up to 10 applications. Also preferred more than two applications, and up to 5 applications during a season are carried out.

The inventive compositions are also suitable for dressing applications on plant propagation material. The latter term embraces seeds of all kinds (fruit, tubers, grains), cuttings, cut shoots and the like. One particular field of application is the treatment of all kinds of seeds.

The method according to the invention is preferably carried out as foliar application when applied to fruit and

vegetables, such as potatoes, tomatoes, cucurbits, preferably cucumbers, melons, watermelons, garlic, onions, and lettuce. Preferably more than two applications and up to 5 or up to 10 applications during a season are carried out.

The method according to the invention is preferably carried out as foliar application when applied to soybean, sugarcane, corn, cotton, wheat, barley, rye, rice, sugar beets or oilseed rape. Preferably more than two applications and up to 5 or up to 10 applications during a season are carried out.

The application rates are usually from 10 g to 2000 g, preferably up to 1000 g of active ingredient per hectare.

According to a further aspect, the present invention relates to seed, comprising one of the inventive compositions as defined herein in an amount of from 0,1 g to 1000 g per 100 kg of seeds.

Thus, according to a further aspect, the present invention relates to the use of the inventive compositions for reducing the stress response of a plant while in parallel combating phytopathogenic fungi which comprises treating a site, for example a plant or a plant propagation material, that is infested or liable to be infested by fungi with the inventive compositions, in any desired sequence or simultaneously, that is, jointly or separately. They are especially suitable for controlling the following plant diseases:

- Alternaria species on vegetables, rapeseed, sugar beet and fruit and rice,
- Aphanomyces species on sugar beet and vegetables,
- Bipolaris and Drechslera species on corn, cereals, rice and lawns,
- Blumeria graminis (powdery mildew) on cereals,
- Botrytis cinerea (gray mold) on strawberries, vegetables, flowers and grapevines,
- Bremia lactucae on lettuce,
- Cercospora species on corn, soybeans, rice and sugar beet,
- Cochliobolus species on corn, cereals, rice (e.g., Cochliobolus sativus on cereals, Cochliobolus miyabeanus on rice),
- Colletotricum species on soybeans and cotton,
- Drechslera species on cereals and corn,
- Exserohilum species on corn,
- Erysiphe cichoracearum and Sphaerotheca fuliginea on cucurbits,
- Fusarium and Verticillium species on various plants,
- Gaeumanomyces graminis on cereals,
- Gibberella species on cereals and rice (e.g., Gibberella fujikuroi on rice),
- Grain staining complex on rice,
- Helminthosporium species on corn and rice,
- Leptosphaeria species on Brassicaceae and Asteraceae (e.g. Helianthus annuus)
- Michrodochium nivale on cereals,
- Mycosphaerella species on cereals, bananas and peanuts,
- Phakopsora pachyrhizi and Phakopsora meibomiae on soybeans,
- Phomopsis species on soybeans and sunflowers,
- Phytophthora infestans on potatoes and tomatoes,
- Plasmopara viticola on grapevines,
- Podosphaera leucotricha on apples,
- Pseudocercosporella herpotrichoides on cereals,
- Pseudoperonospora species on hops and cucurbits,
- Puccinia species on cereals and corn (e.g. Puccinia recondita),
- Pyrenophora species on cereals (e.g. Pyrenophora (syn. Drechslera) teres),
- Pyricularia oryzae, Corticium sasakii, Sarocladium oryzae, S. attenuatum, Entyloma oryzae on rice,
- Pyricularia grisea on lawns and cereals,
- Pythium spp. on lawns, rice, corn, cotton, rapeseed, sunflowers, sugar beet, vegetables and other plants,
- Rhizoctonia species on cotton, rice, potatoes, lawns, corn, rapeseed, potatoes, sugar beet, vegetables and other plants,
- Sclerotinia species on rapeseed and sunflowers,
- Septoria tritici and Stagonospora nodorum on wheat,
- Erysiphe (syn. Uncinula) necator on grapevines,
- Erysiphe (syn. Blumeria) graminis
- Setospaeria species on corn and lawns,
- Sphacelotheca reilinia on corn,
- Thievaliopsis species on soybeans and cotton,
- Tilletia species on cereals,
- Ustilago species on cereals, corn and sugar beet, and
- Venturia species (scab) on apples and pears.

According to a further aspect, the present invention relates to the use of the inventive compositions for reducing the stress response of a plant while in parallel combating pests such as insects in agriculture. They are particularly suitable for controlling the following harmful insects from the order of

lepidopterans (Lepidoptera), for example Agrotis ypsilon, Agrotis segetum, Alabama argillacea, Anticarsia gemmatalis, Argyresthia conjugella, Autographa gamma, Bupalus piniarius, Cacoecia murinana, Capua reticulana, Cheimatobia brumata, Choristoneura fumiferana, Choristoneura occidentalis, Cirphis unipuncta, Cydia pomonella, Dendrolimus pini, Diaphania nitidalis, Diatraea grandiosella, Earias insulana, Elasmopalpus lignosellus, Eupoecilia ambiguella, Evetria bouliana, Feltia subterranea, Galleria mellonella, Grapholitha funebrana, Grapholitha molesta, Heliothis armigera, Heliothis virescens, Heliothis zea, Hellula undalis, Hibernia defoliaria, Hyphantria cunea, Hyponomeuta malinellus, Keiferia lycopersicella, Lambdina fiscellaria, Laphygma exigua, Leucoptera coffeella, Leucoptera scitella, Lithocolletis blancardella, Lobesia botrana, Loxostege sticticalis, Lymantria dispar, Lymantria monacha, Lyonetia clerkella, Malacosoma neustria, Mamestra brassicae, Orgyia pseudotsugata, Ostrinia nubilalis, Panolis flammea, Pectinophora gossypiella, Peridroma saucia, Phalera bucephala, Phthorimaea operculella, Phyllocnistis citrella, Pieris brassicae, Plathypena scabra, Plutella xylostella, Pseudoplusia includens, Rhyacionia frustrana, Scrobipalpula absoluta, Sitotroga cerealella, Sparganothis pilleriana, Spodoptera frugiperda, Spodoptera littoralis, Spodoptera litura, Thaumatopoea pityocampa, Tortrix viridana, Trichoplusia ni and Zeiraphera canadensis,

beetles (Coleoptera), for example *Agrilus sinuatus, Agriotes lineatus, Agriotes obscurus, Amphimallus solstitialis, Anisandrus dispar, Anthonomus grandis, Anthonomus pomorum, Atomaria linearis, Blastophagus piniperda, Blitophaga undata, Bruchus rufimanus, Bruchus pisorum, Bruchus lentis, Byctiscus betulae, Cassida nebulosa, Cerotoma trifurcata, Ceuthorrhynchus assimilis, Ceuthorrhynchus napi, Chaetocnema tibialis, Conoderus vespertinus, Crioceris asparagi, Diabrotica longicornis, Diabrotica speciosa, Diabrotica 12-punctata, Diabrotica virgifera, Diloboderus abderus, Epilachna varivestis, Epitrix hirtipennis, Eutinobothrus brasiliensis, Hylobius abietis, Hypera brunneipennis, Hypera postica, Ips typographus, Lema bilineata, Lema melanopus, Leptinotarsa decemlineata, Limonius californicus, Lissorhoptrus oryzophilus, Melanotus communis, Meligethes aeneus, Melolontha hippocastani, Melolontha melolontha, Oulema oryzae, Ortiorrhynchus sulcatus, Oryazophagus oryzae, Otiorrhynchus ovatus, Phaedon cochleariae, Phyllotreta chrysocephala, Phyllophaga sp., Phyllophaga cuyabana, Phyllophaga triticophaga, Phyllopertha horticola, Phyllotreta nemorum, Phyllotreta striolata, Popillia japonica, Sitona lineatus* and *Sitophilus granaria,*

dipterans (Diptera), for example *Aedes aegypti, Aedes vexans, Anastrepha ludens, Anopheles maculipennis, Ceratitis capitata, Chrysomya bezziana, Chrysomya hominivorax, Chrysomya macellaria, Contarinia sorghicola, Cordylobia anthropophaga, Culex pipiens, Dacus cucurbitae, Dacus oleae, Dasineura brassicae, Fannia canicularis, Gasterophilus intestinalis, Glossina morsitans, Haematobia irritans, Haplodiplosis equestris, Hylemyia platura, Hypoderma lineata, Liriomyza sativae, Liriomyza trifolii, Lucilia caprina, Lucilia cuprina, Lucilia sericata, Lycoria pectoralis, Mayetiola destructor, Musca domestica, Muscina stabulans, Oestrus ovis, Oscinella frit, Pegomya hysocyami, Phorbia antiqua, Phorbia brassicae, Phorbia coarctata, Rhagoletis cerasi, Rhagoletis pomonella, Tabanus bovinus, Tipula oleracea* and *Tipula paludosa,* thrips (Thysanoptera), e.g. *Frankliniella fusca, Frankliniella occidentalis, Frankliniella tritici, Scirtothrips citri, Thrips oryzae, Thrips palmi* and *Thrips tabaci,*

hymenopterans (Hymenoptera), e.g. *Acromyrmex ambuguus, Acromyrmex crassispinus, Acromyrmex heiery, Acromyrmex landolti, Acromyrmex subterraneus, Athalia rosae, Atta capiguara, Atta cephalotes, Atta laevigata, Atta robusta, Atta sexdens, Atta texana, Hoplocampa minuta, Hoplocampa testudinea, Monomorium pharaonis, Solenopsis geminata* and *Solenopsis invicta,*

heteropterans (Heteroptera), e.g. *Acrosternum hilare, Blissus leucopterus, Cyrtopeltis notatus, Dichelops furcatus, Dysdercus cingulatus, Dysdercus intermedius, Euchistos heros, Eurygaster integriceps, Euschistus impictiventris, Leptoglossus phyllopus, Lygus lineolaris, Lygus pratensis, Nezara viridula, Piesma quadrata, Piezodorus guildini, Solubea insularis* and *Thyanta perditor,*

Hemiptera and Homoptera, e.g. Acrosternum hilare, Blissus leucopterus, Cyrtopeltis notatus, Diaphorina citri, Dysdercus cingulatus, Dysdercus intermedius, Eurygaster integriceps, Euschistus impictiventris, Leptoglossus phyllopus, Lygus lineolaris, Lygus pratensis, Nezara viridula, Piesma quadrata, Solubea insularis , Thyanta perditor, Acyrthosiphon onobrychis, Adelges laricis, Aphidula nasturtii, Aphis fabae, Aphis forbesi, Aphis pomi, Aphis gossypii, Aphis grossulariae, Aphis schneideri, Aphis spiraecola, Aphis sambuci, Acyrthosiphon pisum, Aulacorthum solani, Brachycaudus cardui, Brachycaudus helichrysi, Brachycaudus persicae, Brachycaudus prunicola, Brevicoryne brassicae, Capitophorus horni, Cerosipha gossypii, Chaetosiphon fragaefolii, Cryptomyzus ribis, Dreyfusia nordmannianae, Dreyfusia piceae, Dysaphis radicola, Dysaulacorthum pseudosolani, Dysaphis plantaginea, Dysaphis pyri, Empoasca fabae, Hyalopterus pruni, Hyperomyzus lactucae, Macrosiphum avenae, Macrosiphum euphorbiae, Macrosiphon rosae, Megoura viciae, Melanaphis pyrarius, Metopolophium dirhodum, Myzodes persicae, Myzus ascalonicus, Myzus cerasi, Myzus varians, Nasonovia ribis-nigri, Nilaparvata lugens, Pemphigus bursarius, Perkinsiella saccharicida, Phorodon humuli, Psylla mali, Psylla piri, Rhopalomyzus ascalonicus, Rhopalosiphum maidis, Rhopalosiphum padi, Rhopalosiphum insertum, Sappaphis mala, Sappaphis mali, Schizaphis graminum, Schizoneura lanuginosa, Sitobion avenae, Trialeurodes vaporariorum, Toxoptera aurantiiand, Viteus vitifolii, Cimex lectularius, Cimex hemipterus, Reduvius senilis, Triatoma spp., and Arilus critatus,

termites (Isoptera), *e.g. Calotermes flavicollis, Cornitermes cumulans, Heterotermes tenuis, Leucotermes flavipes, Neocapritemes opacus, Procornitermes triacifer; Reticulitermes lucifugus, Syntermes molestus, and Termes natalensis,*

orthopterans (Orthoptera), e.g. *Acheta domestica, Blatta orientalis, Blattella germanica, Forficula auricularia, Gryllotalpa gryllotalpa, Locusta migratoria, Melanoplus bivittatus, Melanoplus femur-rubrum, Melanoplus mexicanus, Melanoplus sanguinipes, Melanoplus spretus, Nomadacris septemfasciata, Periplaneta americana,* Schistocerca *ameri*cana, Schistocerca *peregrina, Stauronotus maroccanus* and *Tachycines asynamorus,*

Arachnoidea, such as arachnids, e.g. of the families Argasidae, Ixodidae and Sarcoptidae, such as Amblyomma americanum, Amblyomma variegatum, Argas persicus, Boophilus annulatus, Boophilus decoloratus, Boophilus microplus, Dermacentor silvarum, Hyalomma truncatum, Ixodes ricinus, Ixodes rubicundus, Ornithodorus moubata, Otobius megnini, Dermanyssus gallinae, Psoroptes ovis, Rhipicephalus appendiculatus, Rhipicephalus evertsi, Sarcoptes scabiei, and Eriophyidae spp. such as Aculus schlechtendali, Phyllocoptrata oleivora and Eriophyes sheldoni; Tarsonemidae spp. such as Phytonemus pallidus and Polyphagotarsonemus latus; Tenuipalpidae spp. such as Brevipalpus phoenicis; Tetranychidae spp. such as Tetranychus cinnabarinus, Tetranychus kanzawai, Tetranychus pacificus, Tetranychus telarius and Tetranychus urticae, Panonychus ulmi, Panonychus citri, and oligonychus pratensis;

thrips (Thysanoptera), e.g. Frankliniella fusca, Frankliniella occidentalis, Frankliniella schultzei, Frankliniella tritici, Scirtothrips citri, Thrips oryzae, Thrips palmi and Thrips tabaci.

In particular, the inventive mixtures are suitable for reducing stress responses in plants while combating pests of the orders Coleoptera, Lepidoptera, Thysanoptera, Homoptera, Isoptera, and Orthoptera.

They are also suitable for reducing stress responses in plants while controlling harmful nematodes such as Meloidogyne, Globodera and Heterodera and other species.

The active ingredient mixtures of the invention can be used in the form of premix formulations or the active ingredients can be applied to the area, plant or seed to be treated simultaneously or in immediate succession, if desired together with further carriers, surfactants or other application-promoting adjuvants customarily employed in formulation technology. Besides an effective amount of the active ingredients, the inventive composition can contain an agriculturally acceptable carrier and/or vehicle. The composition may be in solid form, for example in the form of a powder or granules, or in liquid form, for example in the form of an aqueous solution.

The active ingredients or compositions used according to the present invention can be converted into the formulations conventionally used for pesticides, for example solutions, emulsions, suspensions, dusts, powders, pastes and granules. The use form depends on the particular purpose; in any case, it should ensure fine and uniform distribution of the compound according to the invention.

The present invention furthermore provides a composition as described above with at least one solid or liquid carrier.

Best results are obtained when a formulation is used which supports the transport of the active compounds into the plants, and the distribution within the entire plant.

The compositions generally comprise from 0.1 to 95%, preferably from 0.5 to 90%, by weight of active ingredient.

According to one embodiment of the present invention, the mixture comprising component (A) and component (B) is applied in a weight ratio of from 1:2000 to 100:1.

According to another embodiment of the present invention the mixture comprising component (A) and component (B) is usually applied in a weight ratio of from 1:1000 to 4:1.

According to another embodiment of the present invention the mixture comprising component (A) and component (B) is usually applied in a weight ratio of from 1:100 to 2:1.

When employed in plant protection, the non-phytotoxic amounts of the mixture applied are, depending on the kind of effect desired, the plant or plant part treated and the environmental conditions under which the plant or plant

parts are growing, from 0.01 g to 2000 g per ha.

According to one embodiment of the present invention, the application rates of component (A) are from 0.01 g to 1000 g/ha.

According to another embodiment of the present invention, the application rates of component (A) are from 5 to 500 g/ha.

According to another embodiment of the present invention, the application rates of component (A) are from 10 to 100 g/ha.

According to one embodiment of the present invention, the application rates of component (B) are, depending on the specific nature of the compound used, from 1 g to 3000 g/ha.

According to another embodiment of the present invention, the application rates of component (B) are, depending on the specific nature of the compound used, from 10 to 1500 g/ha.

According to another embodiment of the present invention, the application rates of component (B) are, depending on the specific nature of the compound used, from 20 to 750 g/ha.

Seed can be treated by methods known to the person skilled in the art, such as, for example, seed dressing, seed coating, seed dusting, seed soaking and seed pelleting.

In the treatment of seed, the amounts of active ingredient employed are generally from 1 to 1000 g/100 kg of seed, preferably from 1 to 200 g/100 kg, in particular from 1 to 100 g/100 kg.

When used in the protection of materials or stored products, the amount of active ingredient applied depends on the kind of application area and on the desired effect. Amounts customarily applied in the protection of materials are, for example, 0.001 g to 2000 g, preferably 0.005 g to 1000 g, of active compound per cubic meter of treated material.

The formulations are prepared in a known manner, for example by extending the active compound with solvents and/or carriers, if desired using emulsifiers and dispersants. Solvents/auxiliaries which are suitable are essentially:

- water, aromatic solvents (for example Solvesso products, xylene), paraffins (for example mineral oil fractions), alcohols (for example methanol, butanol, pentanol, benzyl alcohol), ketones (for example cyclohexanone, gamma-butyrolactone), pyrrolidones (NMP, NOP), acetates (glycol diacetate), glycols, fatty acid dimethylamides, fatty acids and fatty acid esters. In principle, solvent mixtures may also be used,
- carriers such as ground natural minerals (for example kaolins, clays, talc, chalk) and ground synthetic minerals (for example finely divided silica, silicates); emulsifiers such as nonionic and anionic emulsifiers (for example polyoxyethylene fatty alcohol ethers, alkylsulfonates and arylsulfonates) and dispersants such as lignosulfite waste liquors and methylcellulose.

Suitable surfactants are alkali metal, alkaline earth metal and ammonium salts of lignosulfonic acid, naphthalenesulfonic acid, phenolsulfonic acid, dibutylnaphthalenesulfonic acid, alkylarylsulfonates, alkyl sulfates, alkylsulfonates, fatty alcohol sulfates, fatty acids and sulfated fatty alcohol glycol ethers, furthermore condensates of sulfonated naphthalene and naphthalene derivatives with formaldehyde, condensates of naphthalene or of naphthalenesulfonic acid with phenol and formaldehyde, polyoxyethylene octylphenol ether, ethoxylated isooctylphenol, octylphenol, nonylphenol, alkylphenol polyglycol ethers, tributylphenyl polyglycol ether, tristearylphenyl polyglycol ether, alkylaryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignosulfite waste liquors and methylcellulose.

Suitable for the preparation of directly sprayable solutions, emulsions, pastes or oil dispersions are mineral oil fractions of medium to high boiling point, such as kerosene or diesel oil, furthermore coal tar oils and oils of vegetable or animal origin, aliphatic, cyclic and aromatic hydrocarbons, for example toluene, xylene, paraffin, tetrahydronaphthalene, alkylated naphthalenes or their derivatives, methanol, ethanol, propanol, butanol, cyclohexanol, cyclohexanone, isophorone, strongly polar solvents, for example dimethyl sulfoxide, N-methylpyrrolidone and water.

Powders, materials for spreading and dustable products can be prepared by mixing or concomitantly grinding the active substances with a solid carrier.

Granules, for example coated granules, impregnated granules and homogeneous granules, can be prepared by binding the active compounds to solid carriers. Examples of solid carriers are mineral earths such as silica gels, silicates, talc, kaolin, attaclay, limestone, lime, chalk, bole, loess, clay, dolomite, diatomaceous earth, calcium sulfate, magnesium sulfate, magnesium oxide, ground synthetic materials, fertilizers, such as, for example, ammonium sulfate, ammonium phosphate, ammonium nitrate, ureas, and products of vegetable origin, such as cereal meal, tree bark meal, wood meal and nutshell meal, cellulose powders and other solid carriers.

Formulations for seed treatment may further comprise binders and/or gelants and if appropriate dyes.

Binders can be added to increase the adhesion of the active compounds to the seed after the treatment. Suitable binders are for example EO/PO block copolymer surfactants, but also polyvinyl alcohols, polyvinylpyrrolidones, polyacrylates, polymethacrylates, polybutenes, polyisobutylenes, polystyrenes, polyethyleneamines, polyethyleneamides, polyethyleneimines (Lupasol®, Polymin®), polyethers, polyurethanes, polyvinyl acetates, Tylose and copolymers of these polymers. A suitable gelant is for example carrageen (Satiagel®).

In general, the formulations comprise from 0.01 to 95% by weight, preferably from 0.1 to 90% by weight, of the active compound. The active compounds are employed in a purity of from 90% to 100%, preferably 95% to 100% (according to NMR spectrum).

Component (A) (1-methylcyclopropene) may be present in form of a complex. Complexing agents comprise inorganic or organic chelating agents, preferably organic chelating agents such as sugars (for example cyclodextrins). However, 1-methylcyclopropene (component A) may also be used in a variety of other formulations.

The concentrations of active compound in the ready-to-use preparations can be varied within relatively wide ranges. In one embodiment of the present invention, they are from 0.0001 to 10%. In another embodiment of the present invention, they arefrom 0.001 to 1%.

The active compounds can also be used with great success in the ultra-low-volume (ULV) process, it being possible to apply formulations with more than 95% by weight of active compound or even the active compound without additives.

For the treatment of seed, the formulations in question give, after two-to-tenfold dilution, active compound concentrations of from 0.01 to 60% by weight, preferably from 0.1 to 40% by weight, in the ready-to-use preparations.

The following are examples of formulations according to the invention: 1. Products for dilution with water

A Water-soluble concentrates (SL, LS)

10 parts by weight of active ingredient are dissolved with 90 parts by weight of water or with a water-soluble solvent. As an alternative, wetters or other auxiliaries are added. The active compound dissolves upon dilution with water. This gives a formulation having an active compound content of 10% by weight.

B Dispersible concentrates (DC)

20 parts by weight of active ingredient are dissolved in 70 parts by weight of cyclohexanone with addition of 10 parts by weight of a dispersant, for example polyvinylpyrrolidone. Dilution with water gives a dispersion. The active compound content is 20% by weight.

C Emulsifiable concentrates (EC)

15 parts by weight of active ingredient are dissolved in 75 parts by weight of xylene with addition of calcium dodecylbenzenesulfonate and castor oil ethoxylate (in each case 5 parts by weight). Dilution with water gives an emulsion. The formulation has an active compound content of 15% by weight.

D Emulsions (EW, EO, ES)

25 parts by weight of active ingredient are dissolved in 35 parts by weight of xylene with addition of calcium dodecylbenzenesulfonate and castor oil ethoxylate (in each case 5 parts by weight). This mixture is added to 30 parts by weight of water by means of an emulsifying machine (e.g. Ultraturrax) and made into a homogeneous emulsion. Dilution with water gives an emulsion. The formulation has an active compound content of 25% by weight.

E Suspensions (SC, OD, FS)

In an agitated ball mill, 20 parts by weight of active ingredient are comminuted with addition of 10 parts by weight of dispersants and wetters and 70 parts by weight of water or an organic solvent to give a fine active compound suspension. Dilution with water gives a stable suspension of the active compound. The active compound content in the formulation is 20% by weight.

F Water-dispersible granules and water-soluble granules (WG, SG)

50 parts by weight of active ingredient are ground finely with addition of 50 parts by weight of dispersants and wetters and made into water-dispersible or water-soluble granules by means of technical appliances (for example extrusion, spray tower, fluidized bed). Dilution with water gives a stable dispersion or solution of the active compound. The formulation has an active compound content of 50% by weight.

G Water-dispersible powders and water-soluble powders (WP, SP, SS, WS)

75 parts by weight of active ingredient are ground in a rotor-stator mill with addition of 25 parts by weight of dispersants, wetters and silica gel. Dilution with water gives a stable dispersion or solution of the active compound. The active compound content of the formulation is 75% by weight.

2. Products to be applied undiluted

H Dustable powders (DP, DS)

5 parts by weight of active ingredient are ground finely and mixed intimately with 95 parts by weight of finely divided kaolin. This gives a dustable product with an active compound content of 5% by weight.

I Granules (GR, FG, GG, MG)

0.5 part by weight of active ingredient is ground finely and associated with 99.5 parts by weight of carriers. Current methods are extrusion, spray-drying or the fluidized bed. This gives granules with an active compound content of 0.5% by weight to be applied undiluted.

J ULV solutions (UL)

10 parts by weight of active ingredient are dissolved in 90 parts by weight of an organic solvent, for example xylene. This gives a product with an active compound content of 10% by weight to be applied undiluted.

Seed treatment typically utilizes water-soluble concentrates (LS), suspensions (FS), dusts (DS), water-dispersible and water-soluble powders (WS, SS), emulsions (ES), emulsifiable concentrates (EC) and gel formulations (GF). These formulations can be applied neat or preferably diluted to the seed. The application can take place prior to sowing.

Preference is given to using FS formulations for seed treatment. Such formulations typically comprise from 1 to 800 g/l of active compound, from 1 to 200 g/l of surfactants, from 0 to 200 g/l of antifreeze, from 0 to 400 g/l of binder, from 0 to 200 g/! of dyes and solvent, preferably water.

The active compounds can be used as such, in the form of their formulations or the use forms prepared therefrom, for example in the form of directly sprayable solutions, powders, suspensions or dispersions, emulsions, oil dispersions, pastes, dustable products, materials for spreading, or granules, by means of spraying, atomizing, dusting, spreading or pouring. The use forms depend entirely on the intended purposes; the intention is to ensure in each case the finest possible distribution of the active compounds used according to the invention.

Aqueous use forms can be prepared from emulsion concentrates, pastes or wettable powders (sprayable powders, oil dispersions) by adding water. To prepare emulsions, pastes or oil dispersions, the substances, as such or dissolved in an oil or solvent, can be homogenized in water by means of a wetting agent, tackifier, dispersant or emulsifier. Alternatively, it is also possible to prepare concentrates composed of active substance, wetter, tackifier, dispersant or emulsifier and, if appropriate, solvent or oil, and such concentrates are suitable for dilution with water.

The active compound concentrations in the ready-to-use preparations can be varied within relatively wide ranges. In general, they are from 0.0001 to 10%, preferably from 0.01 to 1%.

The active compounds may also be used successfully in the ultra-low-volume process (ULV), by which it is possible to apply formulations comprising over 95% by weight of active compound, or even to apply the active compound without additives.

Various types of oils, wetters, adjuvants, may be added to the active compounds, if appropriate not until immediately prior to use (tank mix). These agents can be admixed with the agents according to the invention in a weight ratio of 1:100 to 100:1, preferably 1:10 to 10:1.

Suitable adjuvants in this sense are in particular: organically modified polysiloxanes, for example Break Thru S 240®; alcohol alkoxylates, for example Atplus 245®, Atplus MBA 1303®, Plurafac LF 300® and Lutensol ON 30®; EO/PO block polymers, for example Pluronic RPE 2035® and Genapol B®; alcohol ethoxylates, for example Lutensol XP 80®; and sodium dioctylsulfosuccinate, for example Leophen RA®.

In a preferred embodiment, the mixtures contain 1-methylcyclopropene together with a metal-chelating agent as described in US 2005/0261132 or an encapsulating agent as described in US 2005/0261131.

Use examples

The active ingredients were used as formulations. The formulations were diluted to the concentrations given in the respective examples. The different treatments were evaluated by estimating the infected leaf area in percent.

Mean percentage of infected leaf area was calculated for each treatment and translated in efficacy of pathogen control expressed as percent of the untreated control.

The efficacy (E) is calculated as follows using Abbot's formula:

$$E = (1- \alpha/\beta) \cdot 100$$

$\alpha$ corresponds to the fungicidal infection of the treated plants in % and

$\beta$ corresponds to the fungicidal infection of the untreated (control) plants in %

An efficacy of 0 means the infection level of the treated plants corresponds to that of the untreated control plants; an efficacy of 100 means the treated plants were not infected. The expected efficacies of the combinations of the active compounds were estimated using Colby's formula (Colby, S.R., Calculating synergistic and antagonistic responses of herbicide combinations, Weeds, 15, pp. 20-22, 1967) and compared with the observed efficacies.

Colby´s formula: $$E = x + y - x \cdot y/100$$

E expected efficacy, expressed in % of the untreated control, when using the mix- ture of the active compounds A and B at the concentrations a and b

x efficacy, expressed in % of the untreated control, when using the active ingredi- ent A at the concentration a

y efficacy, expressed in % of the untreated control, when using the active ingredi- ent B at the concentration b

Example 1

Efficacy against barley net blotch caused by Pyrenophora [syn. Drechslera] teres

The spray solutions were prepared in several steps: First, a stock solution was prepared by mixing acetone and/or DMSO and the wetting agent/emulsifier Uniperol, which is based on ethoxylated alkylphenoles, in a ratio (volume) solvent to emulsifier of 99 to 1. Subsequently, the above-described solvent/emulsifier mixture was added to 25 mg of the active compound to give a total volume of 10 ml. Consequently, water was added to give a total volume of 100 ml. Finally, the prepared stock solution was diluted with the above described solvent-emulsifier-water mixture to the concentration needed.

The first fully developed leaves of pot grown barley plants were sprayed to run-off with an aqueous suspension, containing the concentration of active ingredient mentioned in the table 1 below. The next day, the treated plants were inoculated with an aqueous spore suspension of Pyrenophora (syn. Drechslera) teres. Subsequently, the trial plants were immediately transferred to a humid chamber in the greenhouse. After 6 days of cultivation at 20-24°C and a relative humidity close to 70%, the extent of fungal attack on the leaves was visually assessed as % leaf area.

The percentage of infected leaf areas was used to calculate the efficacy expressed as percent of the untreated control as described. Efficacy 100 means 0 % infected leaf area. The expected efficacies according to Colby's formula (see above) were compared with the observed efficacies of the tested combinations.

Results: The non-treated control plants displayed an infestation rate of 90%.

Table 1:

| Active ingredient/active ingredient combination | Conc. (ppm) | Ratio of mixture | Observed efficacy (%) | Expected efficacy (%) | Synergism (%) |
|---|---|---|---|---|---|
| 1-methylcyclopropene | 1 | | 0 | | |
| Boscalid | 1 | | 33 | | |
| 1-methylcyclopropene + Boscalid | 1<br>1 | 1:1 | 67 | 33 | 34 |

The results demonstrate that the efficacy in the combination ratios of the active compounds shown in table 1 is higher than the expected efficacy calculated using Colby's formula.

Example 2

Efficacy against Asian soybean rust caused by Phakopsora pachyrhizi (Phakpa)

The spray solutions were prepared in several steps: First a stock solution was prepared by dissolving 200 mg of the active ingredients in an aqueous solution containing 1 % (v/v) of Atplus and 0.1% (v/v) of Silwet L77. Subsequently, these stock solutions were further diluted to the concentrations needed using the aqueous solution described.

Primary leaves and first trifoliate leaves of soybean plants grown in pots under greenhouse conditions were sprayed with the respective dilutions of the given concentrations of active ingredients (table 2). Spray volume corresponded to 350 l/ha. The spray film was allowed to dry for 24 h, and then the plants were inoculated with a spore suspension of soybean rust. Following the inoculation the plants were incubated in a growth chamber in the dark over night at high humidity (90 to 95%) and 22 to 24°C to allow the spores to germinate and to penetrate the leafs. The next day the plants were transferred to the greenhouse and kept there at 22 to 24 °C and a relative humidity of 80 to 90 %. After 14 days the brown rust infection was scored as % infection of the total leaf area of primary leaves and first trifoliate leaves.

The percentage of infected leaf areas was used to calculate the efficacy expressed as percent of the untreated control as described. Efficacy 100 means 0 % infected leaf area. The expected efficacies according to Colby's formula (see above) were compared with the observed efficacies of the tested combinations.

Results: The non-treated control plants displayed an infestation rate of 81 %.

Table 2:

| Active ingredient/active ingredient combination | Conc. (mg/L) | Ratio | Observed efficacy (%) | Expected efficacy (%) | Synergism (%) |
|---|---|---|---|---|---|
| 1-methylcyclopropene | 29<br>143 | | 9<br>38 | | |
| Boscalid | 714<br>1429 | | 16<br>25 | | |
| 1-methylcyclopropene + Boscalid | 143 + 714 | 1 : 5 | 59 | 48 | 11 |
| 1-methylcyclopropene + Boscalid | 29 + 714 | 1 : 25 | 49 | 23 | 26 |
| 1-methylcyclopropene + Boscalid | 29 + 1429 | 1 : 50 | 58 | 31 | 27 |

The results demonstrate clearly, that the efficacy in the combination ratios of the active compounds shown in table 2 is higher than the expected efficacy calculated using Colby's formula.

Example 3

Soybean plants are raised under greenhouse conditions with two plants each per 12-cm pot. Spray treatments of the leaves are carried out with a volume of liquid of 750 l/ha when the plants have developed one to two trifoliate leaves. 24 hours after treatment, the shoots of the soybean plants are dissected above the cotyledons and wilted for 10 minutes under laboratory conditions. Shoots representing a distinct treatment are incubated for 60 minutes under laboratory conditions in a 100-ml Erlenmeyer flask sealed with a rubber cap. Thereafter, gas samples are taken and analyzed for their ethylene content by gas chromatography.

The results obtained indicate that the inventive mixtures inhibit ethylene formation in drought-stressed soybean leaves more effectively than the calculated effects of the two components when used alone.

## Claims

1. An agrochemical mixture, comprising as component (A) 1-methylcyclopropene and as component (B) at least one active compound selected from the group consisting of

   B1) azoles selected from propiconazole, bitertanole, bromuconazole, cyproconazole, difenoconazole, diniconazole, enilconazole, epoxiconazole, fenbuconazole, flusilazole, fluquinconazole, flutriafol, hexaconazole, imibenconazole, ipconazole, metconazole, myclobutanil, penconazole, prothioconazole, simeconazole, tebuconazole, tetraconazole, triadimenol, triadimefon, triticonazole, cyazofamid, imazalil, pefurazoate, prochloraz, triflumizol, benomyl, carbendazim, fuberidazole, thiabendazole, ethaboxam, etridiazole and hymexazole;
B2) carboxylic amides selected from benalaxyl, benodanil, boscalid, carboxin, mepronil, fenfuram, fenhexamid, flutolanil, furametpyr, metalaxyl, ofurace, oxadixyl, oxycarboxin, penthiopyrad, thifluzamid, tiadinil, 4-difluoromethyl-2- methyl-thiazol-5-carboxylic acid-(4'-bromo-biphenyl-2-yl)-amide, 4- difluoromethyl-2-methyl-thiazol-5-carboxylic acid-(4'-trifluoromethyl-biphenyl-2- yl)-amide, 4-difluoromethyl-2-methyl-thiazol-5-carboxylic acid-(4'-chloro-3'- fluoro-biphenyl-2-yl)-amide, 3-difluoromethyl-1 -methyl-pyrazol-4-carboxylic acid- (3',4'-dichloro-4-fluoro-biphenyl-2-yl)-amide, 3,4-dichloro-isothiazol-5-carboxylic acid-(2-cyano-phenyl)-amide, dimethomorph, flumorph, flumetover, fluopicolide (picobenzamid), zoxamide, carpropamide, diclocymet, mandipropamid, N-(2-(4- [3-(4-chloro-phenyl)-prop-2-inyloxy]-3-methoxy-phenyl)-ethyl)-2-methanesulfonylamino-3-methyl-butyramid and N-(2-(4-[3-(4-chloro-phenyl)-prop-2-inyloxy]-3- methoxy-phenyl)-ethyl)-2-ethanesulfonylamino-3-methyl-butyramide;
B3) nitrogen-containing heterocyclic compounds selected from fluazinam, pyrifenox, 3-[5-(4-chloro-phenyl)-2,3-dimethyl-isoxazolidin-3-yl]-pyridine, bupirimat, cyprodinil, ferimzon, fenarimol, mepanipyrim, nuarimol, pyrimethanil, triforin, fludioxonil, fenpiclonil, aldimorph, dodemorph, fenpropimorph, tridemorph, iprodion, procymidon, vinclozolin, acibenzolar-S-methyl, anilazin, captan, captafol, dazomet, diclomezine, fenoxanil, folpet, fenpropidin, famoxadone, fenamidone, octhilinon, probenazol, proquinazid, pyroquilon, quinoxyfen, tricyclazol, 2- butoxy-6-iodo-3-propyl-chromen-4-one, 3-(3-bromo-6-fluoro-2-methyl-indole-1- sulfonyl)-[1 ,2,4]triazole-1 -sulfonic acid dimethylamide;
B4) carbamates and dithiocarbamates selected from ferbam, mancozeb, metiram, metam, propineb, thiram, zineb, ziram, diethofencarb, flubenthiavalicarb, iprovalicarb, propamocarb, 3-(4-chloro-phenyl)-3-(2-isopropoxycarbonylamino-3-methyl-butyrylamino)-propionic acid methylester andN-(1-(1-(4- cyanophenyl)ethanesulfonyl)-but-2-yl) carbamic acid -(4-fluorophenyl)ester;
B5) guanidines selected from dodin, iminoctadine and guazatin;
B6) antibiotics selected from kasugamycin, polyoxine, streptomycin and validamycin A;
B7) fentin salts;
B8) sulfur-containing heterocyclic compounds selected from isoprothiolan and dithianon;
B9) organophosphorous compounds selected from edifenphos, fosetyl, fosetyl-aluminium, iprobenfos, pyrazophos, tolclofos-methyl, phosphoric acid and the salts thereof;
B10 ) organo-chloro compounds selected from thiophanate methyl, chlorothalonil, dichlofluanid, tolylfluanid, flusulfamid, phthalide, hexachlorbenzene, pencycuron, quintozen;
B11) nitrophenyl derivatives selected from binapacryl, dinocap and dinobuton;
B12) inorganic active ingredients selected from Bordeaux composition, copper acetate, copper hydroxide, copper oxychloride, basic copper sulfate and sulfur;
B13) spiroxamine;
B14) cyflufenamide;
B15) cymoxanil;
B16) metrafenone;
B17) organo(thio)phosphates selected from acephate, azamethiphos, azinphos-methyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos and trichlorfon;
B18) carbamates selected from alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicar and triazamate;
B19) pyrethroids selected from allethrin, bifenthrin, cyfluthrin, cyhalothrin, cyphenothrin, cypermethrin, alpha-cypermethrin, beta-cypermethrin, zeta- cypermethrin, deltamethrin, esfenvalerate, etofenprox, fenpropathrin, fenvalerate, imiprothrin, lambda-cyhalothrin, permethrin, prallethrin, pyrethrin I and II, resmethrin, silafluofen, tau-fluvalinate, tefluthrin, tetramethrin, tralomethrin, transfluthrin andprofluthrin, dimefluthrin;
B20 ) growth regulators selected from a) chitin synthesis inhibitors that are selected from the benzoylureas chlorfluazuron, diflubenzuron, flucycloxuron, flufenoxuron, hexaflumuron, lufenuron, novaluron, teflubenzuron, triflumuron; buprofezin, diofenolan, hexythiazox, etoxazole and clofentazine; b) ecdysone antagonists that are selected from halofenozide, methoxyfenozide, tebufenozide and azadirachtin; c) juvenoids that are selected from pyriproxyfen, methoprene and fenoxycarb and d) lipid biosynthesis inhibitors that are selected from spirodiclofen, spiromesifen and spirotetramat;
B21) nicotinic receptor agonists/antagonists compounds selected from clothianidin, dinotefuran, imidacloprid, thiamethoxam, nitenpyram, acetamiprid, thiacloprid;
B22) the thiazol compound of formula ($\Gamma^1$)

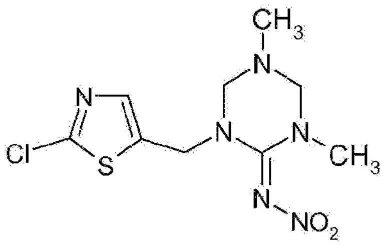

($\Gamma^1$)

,

B23) GABA antagonist compounds selected from acetoprole, endosulfan, ethiprole, fipronil, vaniliprole, pyrafluprole, pyriprole and the phenylpyrazole compound of formula $\Gamma^2$

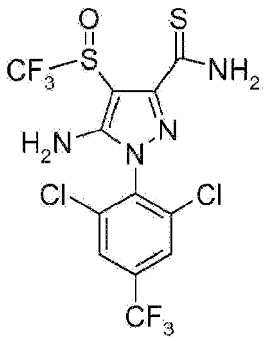

($\Gamma^2$)

B24) METI I compounds selected from fenazaquin, pyridaben, tebufenpyrad, tolfenpyrad and flufenerim;
B25) METI II and III compounds selected from acequinocyl, fluacyprim and hydramethylnon;
B26) chlorfenapyr;
B27) oxidative phosphorylation inhibitor compounds selected from cyhexatin, diafenthiuron, fenbutatin oxide and propargite;
B28) cyromazine;
B29) piperonyl butoxide;
B30 ) indoxacarb; and
B31) a compound selected from benclothiaz, bifenazate, cartap, flonicamid, pyridalyl, pymetrozine, sulfur, thiocyclam, flubendiamide, cyenopyrafen, flupyrazofos, cyflumetofen, amidoflumet, the aminoquinazolinone compound of formula $\Gamma^4$

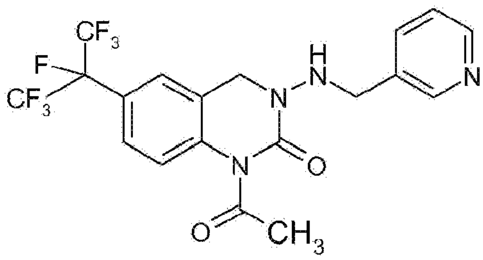

($\Gamma^4$),

and anthranilamide compounds of formula $\Gamma^5$

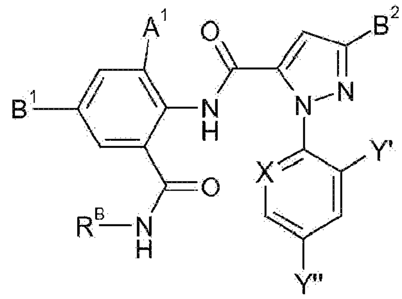

($\Gamma^5$)

wherein $A^1$ is $CH_3$, Cl, Br, I, X is C-H, C-Cl, C-F or N, Y' is F, Cl, or Br, Y" is F, Cl, $CF_3$, $B^1$ is hydrogen, Cl, Br, I, CN, $B^2$ is Cl, Br, $CF_3$, $OCH_2CF_3$, $OCF_2H$, and $R^B$ is hydrogen, $CH_3$ or $CH(CH_3)_2$;

B32) lipid biosynthesis inhibitors selected from chlorazifop, clodinafop, clofop, cyhalofop, diclofop, fenoxaprop, fenoxaprop-p, fenthiaprop, fluazifop, fluazifop- P, haloxyfop, haloxyfop-P, isoxapyrifop, metamifop, propaquizafop, quizalofop, quizalofop-P, trifop, alloxydim, butroxydim, clethodim, cloproxydim, cycloxydim, profoxydim, sethoxydim, tepraloxydim, tralkoxydim, butylate, cycloate, diallate, dimepiperate, EPTC, esprocarb, ethiolate, isopolinate, methiobencarb, molinate, orbencarb, pebulate, prosulfocarb, sulfallate, thiobencarb, tiocarbazil, triallate, vemolate, benfuresate, ethofumesate, bensulide andpinoxaden;

B33) ALS inhibitors selected from amidosulfuron, azimsulfuron, bensulfuron, chlorimuron, chlorsulfuron, cinosulfuron, cyclosulfamuron, ethametsulfuron, ethoxysulfuron, flazasulfuron, flupyrsulfuron, foramsulfuron, halosulfuron, imazosulfuron, iodosulfuron, mesosulfuron, metsulfuron, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, imazamethabenz, imazamox imazapic, imazapyr, imazaquin, imazethapyr, cloransulam, diclosulam, florasulam, flumetsulam, metosulam, penoxsulam, bispyribac, pyriminobac, propoxycarbazone, flucarbazone, pyribenzoxim, pyriftalid, pyrithiobac, flucetosulfuron, orthosulfamuron, pyrimisulfan;

B34) photosynthesis inhibitors selected from atraton, atrazine, ametryne, aziprotryne, cyanazine, cyanatryn, chlorazine, cyprazine, desmetryne, dimethametryne, dipropetryn, eglinazine, ipazine, mesoprazine, methometon, methoprotryne, procyazine, proglinazine, prometon, prometryne, propazine, sebuthylazine, secbumeton, simazine, simeton, simetryne, terbumeton, terbuthylazine, terbutryne, trietazine, ametridione, amibuzin, hexazinone, isomethiozin, metamitron, metribuzin, bromacil, isocil, lenacil, terbacil, brompyrazon, chloridazon, dimidazon, desmedipham, phenisopham, phenmedipham, phenmediphamethyl, benzthiazuron, buthiuron, ethidimuron, isouron, methabenzthiazuron, monoisouron, tebuthiuron, thiazafluron, anisuron, buturon, chlorbromuron, chloreturon, chlorotoluron, chloroxuron, difenoxuron, dimefuron, diuron, fenuron, fluometuron, fluothiuron, isoproturon, linuron, methiuron, metobenzuron, metobromuron, metoxuron, monolinuron, monuron, neburon, parafluron, phenobenzuron, siduron, tetrafluron, thidiazuron, cyperquat, diethamquat, difenzoquat, diquat, morfamquat, paraquat, bromobonil, bromoxynil, chloroxynil, iodobonil, ioxynil, amicarbazone, bromofenoxim, flumezin, methazole, bentazone, propanil, pentanochlor, pyridate, and pyridafol;

B35) protoporphyrinogen-IX oxidase inhibitors selected from acifluorfen, bifenox, chlomethoxyfen, chlornitrofen, ethoxyfen, fluorodifen, fluoroglycofen, fluoronitrofen, fomesafen, furyloxyfen, halosafen, lactofen, nitrofen, nitrofluorfen, oxyfluorfen, fluazolate, pyraflufen, cinidon-ethyl, flumiclorac, flumioxazin, flumipropyn, fluthiacet, thidiazimin, oxadiazon, oxadiargyl, azafenidin, carfentrazone, sulfentrazone, pentoxazone, benzfendizone, butafenacil, pyraclonil, profluazol, flufenpyr, flupropacil, nipyraclofen, etnipromid, and bencarbazone;

B36) bleacher herbicides selected from metflurazon, norflurazon, flufenican, diflufenican, picolinafen, beflubutamid, fluridone, flurochloridone, flurtamone, mesotrione, sulcotrione, isoxachlortole, isoxaflutole, benzofenap, pyrazolynate, pyrazoxyfen, benzobicyclon, amitrole, clomazone, aclonifen, 4-(3- trifluoromethyl-phenoxy)-2-(4-trifluoromethylphenyl)pyrimidine, topramezone, 4- hydroxy-3-{[2-methyl-6-(trifluoromethyl)-3-pyridinyl]carbonyl}bicyclo[3.2.1]oct-3- en-2-one, 4-hydroxy-3-{[2-(2-methoxyethoxy)methyl-6-(trifluoro-methyl)-3-pyridinyl]carbonyl}bicylo[3.2.1]oct-3-en-2-one, 4-hydroxy-3-[4-(methylsulfonyl)- 2-nitrobenzoyl]bicyclo[3.2.1]-oct-3-en-2-one, 2-[2-chloro-4-(methylsulfonyl)-3- [(2,2,2-trifluoroethoxy)methyl]benzoyl]-3-hydroxy-2-cyclohexen-1-one andpyrasulfotole; B37) glyphosate in its acid form or as a derivative thereof, such as the mono isopropylammonium salt, the sodium salt, trimesium salt (sulfosate) or a mixture thereof;

B38) glutamine synthase inhibitors selected from glufosinate and bilanaphos;

B39) asulam;

B40 ) mitose inhibitors selected from benfluralin, butralin, dinitramine, ethalfluralin, fluchloralin, isopropalin, methalpropalin, nitralin, oryzalin, pendimethalin, prodiamine, profluralin, trifluralin, amiprofos-methyl, butamifos,

dithiopyr, thiazopyr, propyzamide, tebutam, chlorthal, carbetamide, chlorbufam, chlorpropham and propham;
B41)VLCFA inhibitors selected from acetochlor, alachlor, butachlor, butenachlor, delachlor, diethatyl, dimethachlor, dimethenamid, dimethenamid-P, metazachlor, metolachlor, S-metolachlor, pretilachlor, propachlor, propisochlor, prynachlor, terbuchlor, thenylchlor, xylachlor, allidochlor, CDEA, epronaz, diphenamid, napropamide, naproanilide, pethoxamid, flufenacet, mefenacet, fentrazamide, anilofos, piperophos, cafenstrole, indanofan and tridiphane;
B42) cellulose biosynthesis inhibitors selected from dichlobenil, chlorthiamid, isoxaben and flupoxam;
B43) decoupler herbicides selected from dinofenate, dinoprop, dinosam, dinoseb, dinoterb, DNOC, etinofen and medinoterb;
B44) auxin herbicides selected from clomeprop, 2,4-D, 2,4,5-T, MCPA, MCPA thioethyl, dichlorprop, dichlorprop-P, mecoprop, mecoprop-P, 2,4-DB, MCPB, chloramben, dicamba, 2,3,6-TBA, tricamba, clopyralid, fluroxypyr, picloram, triclopyr, benazolin, aminopyralid, quinclorac, and quinmerac;
B45) auxin transport inhibitors selected from naptalam and diflufenzopyr;
B46) benzoylprop, flamprop, flamprop-M, bromobutide, chlorflurenol, cinmethylin, methyldymron, etobenzanid, fosamine, metam, pyributicarb, oxaziclomefone, dazomet, triaziflam, methyl bromide, and endothal;
B47) inhibitors of ethylene biosynthesis which block the conversion of ACC into ethylene selected from $Co^{++}$ or $Ni^{++}$ ions, radical-scavenging phenolic substances such as n-propyl gallate, polyamines suc as putrescine, spermine, spermidine, structural ACC analogs such as $\alpha$-aminoisobutyric acid, L- aminocyclopropene-1-carboxylic acid, salicylic acid including its synthetic analogon acibenzolar-S-methyl, structural analogs of ascorbic acid which act as inhibitors of ACC oxidase, such as prohexadione-Ca or trinexapac-ethyl, and also triazolyl compounds as inhibitors of cytochrome P-450-dependent monooxygenase;
B48) inhibitors of the action of ethylene 2, 5-norbornadiene, and 3-amino-1 ,2,4- triazole or $Ag^{++}$ ions
B49) ethylene biosynthesis inhibitors which inhibit the conversion of S-adenosyl- L-methionine into 1-aminocyclopropane-1-carboxylic acid (ACC), such as de- rivatives of vinylglycine, hydroxylamines, oxime ether derivatives;

in synergistically effective amounts.

**2.** The mixture according to claim 1 , wherein component (B) is selected from epoxiconazole, metconazole, tebuconazole, prothioconazole, triticonazole, fluquinconazole, propiconazole, cyproconazole, boscalid, dimethomorph, fenpropimorph, chlorothalonil, metrafenone, clothianidin, glyphosate, glufosinate, imazamethabenz, imazamox imazapic, imazapyr, imazaquin, imazethapyr, prohexadione-Ca, diflufenzopyr (thiamethoxam), fipronil or imidacloprid.

**3.** The mixture according to claim 1 , wherein component (B) is selected from epoxiconazole, metconazole, boscalid, dimethomorph, metrafenone, glyphosate, prohexadione-Ca, diflufenzopyr or fipronil.

**4.** The mixture according to claim 1 , comprising the component (A) and the component (B) in a weight ratio of from 1:2000 to 100:1.

**5.** The composition, comprising a liquid or solid carrier and a mixture according to any one of claims 1 to 4.

**6.** The use of a mixture according to any one of claims 1 to 4 or the composition according to claim 5 for increasing the yield and/or improving the vigor of an agricultural plant.

**7.** The use according to claim 6 for increasing the stress tolerance of a plant.

**8.** The method for increasing the yield and/or improving the vigor of a plant, which comprises treating the plant, the locus where the plant is growing or is expected to grow, and/or the seeds from which the plant grows with a non-phytotoxic effective amount of the mixtures as defined in claims 1 to 4.

**9.** The method according to claim 8, wherein the plant, the locus where the plant is growing or is expected to grow, and/or the seeds from which the plant grows are treated simultaneously (together or separately) or subsequently with 1-methylcyclopropene and at least one component (B).

**10.** The method according to claims 8 or 9, wherein the treatment(s) are carried out as foliar application.

**11.** The method according to any one of claims 8 to 10, wherein the mixture as claimed in claims 1 to 4 is applied in an amount of from 0.01 g/ha to 2000 g/ha.

12. The method according to any one of claims 8 to 11 , wherein the treatment is made to vegetables or field crops.

13. The method according to any one of claims 8 to 11 , wherein the treatment is made to potatoes, tomatoes, cucurbits, cucumbers, melons, watermelons, garlic, onions, bananas, peanuts, carrots, cabbage, peppers, common beans, peas, lentils or lettuce.

14. The method according to any one of claims 8 to 11 , wherein the treatment is made to apples, pears, stone fruits, or citrus.

15. The method according to any one of claims 8 to 11 , wherein the treatment is made to strawberries, cherries, almonds, mango, papaya, blueberries or grapes.

16. The method according to any of claims 8 to 11 , wherein the treatment is made to soybean, sugarcane, corn, cotton, wheat, barley, rye, rice, sugar beets or oilseed rape.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 723960 A
- WO 0015615 A
- WO 0194339 A
- EP 338992 A
- DE 19846792
- WO 05044002 A
- DE 2903612
- EP 545099 A
- US 3249499 A
- US 3937840 A
- JP 1104514 A
- GB 1500581 A
- GB 2058059 A
- US 3399214 A
- JP 10130268 B
- EP 120321 A
- EP 860438 A
- WO 9942447 A
- DE 2324020
- US 4664696 A
- GB 2098607 A
- EP 196038 A
- EP 15756 A
- EP 267778 A
- GB 857383 A
- BE 835579
- WO 9616048 A
- EP 40345 A
- EP 234242 A
- FR 2641277
- US 3991071 A
- JP 54119462 A
- US 3631176 A
- US 3657443 A
- DE 1209799
- US 3017415 A
- EP 639574 A
- JP 518249 A
- JP 532202 A
- EP 49854 A
- EP 310550 A
- GB 1218623 A
- EP 224339 A
- DD 151404 A
- DE 1901421
- DE 1198125
- DE 2752096
- DE 1164152
- GB 1312536 A
- US 3903090 A
- DE OS2207576
- US 2720480 A
- US 2553770 A
- US 4052395 A
- EP 262393 A
- WO 9748684 A
- GB 13943373 A
- US 5240940 A
- GB 1419121 A
- US 1972961 A
- US 3379610 A
- US 2504404 A
- US 3248400 A
- US 2791605 A
- BE 611960
- DE 642532
- US 2457674 A
- EP 78663 A
- JP 9323984 A
- EP 472996 A
- DE 1643040
- US 2867562 A
- GB 1114155 A
- US 3499086 A
- DE 1493736 A
- FR 2254276
- DE 1545790
- GB 1467561 A
- DE OS1930540
- US 3290353 A
- DE 1193498
- EP 199433 A
- DE 1643347
- DE 2732257
- DE 682048
- US 2526660 A
- EP 281842 A
- WO 9619442 A
- US 3957847 A
- US 5945567 A
- WO 03066609 A
- WO 9924413 A
- WO 0449804 A
- EP 1035122 A
- WO 0314103 A
- EP 1028125 A
- WO 9828279 A
- EP 454621 A1

- WO 9828277 A
- US 4822779 A
- JP 2002193709 B
- WO 0100614 A
- WO 9845274 A
- US 6335357 B
- US 6221890 B
- JP 21010907 B
- WO 03007717 A
- WO 03007718 A
- WO 04080180 A
- WO 0170671 A
- WO 0248137 A
- WO 0324222 A
- WO 0315518 A
- WO 0467528 A
- WO 0433468 A
- WO 05118552 A
- EP 0242236 A
- EP 242246 A
- WO 9200377 A
- EP 0257993 A
- US 5013659 A
- EP 0142924 A
- EP 0193259 A
- WO 9211376 A
- WO 9214827 A
- WO 9119806 A
- WO 9113972 A
- US 20050261132 A
- US 20050261131 A

**Non-patent literature cited in the description**


- The Pesticide Manual. British Crop Protection Council, 2003
- *Proc. Br. Crop Prot. Conf. - Pests Dis.,* 1998, vol. 2, 327
- *AGROW No. 243,* 1995, 22
- *Proc. 1990 Br. Crop. Prot. Conf. - Pests Dis.,* 1990, vol. 1, 459
- *Noyaku Kagaku,* 1983, vol. 8, 575
- *Fruits,* 1973, vol. 28, 545
- *Proc. 1988 Br. Crop Prot. Conf. - Pests Dis.,* 1988, vol. 1, 33
- *Proc. Br. Crop Prot. Conf.-Pests Dis.,* 1984, vol. 1, 413
- *Proc. Br. Crop Prot. Conf.-Pests Dis.,* 1992, vol. 5-3, 411
- *Proc. 1988 Br. Crop Prot. Conf. - Pests Dis.,* 1988, vol. 2, 519
- Pesticide Manual. 2000, 712
- The Pesticide Manual. The British Crop Protection Council, 1995, 474
- The Pesticide Manual. The British Crop Protection Council, 1995, 482
- *Proc. 1988 Br. Crop Prot. Conf. - Pests Dis.,* 1988, vol. 1, 65
- *Phytopathology,* 1962, vol. 52, 754
- *Bull. Soc. Chim. Fr.,* vol. 15, 891
- *J. Am. Chem. Soc.,* 1947, vol. 69, 1234
- *Proc. Insectic. Fungic. Conf. 8.,* 1975, vol. 2, 715
- *Jpn. Pesticide Inf.,* 1970, 11
- *C. R. Seances Acad. Agric. Fr.,* 1945, vol. 31, 24
- Agro Project. PJB Publications Ltd, 2004
- Farm Chemicals Handbook. Meister Publishing Company, 2001, vol. 88
- *Pesticide Science,* 1988, vol. 54, 237-243
- **Colby, S.R.** Calculating synergistic and antagonistic responses of herbicide combinations. *Weeds,* 1967, vol. 15, 20-22